# EUROPEAN PATENT SPECIFICATION

(11) **EP 2 871 877 B1**
(45) Date of publication and mention of the grant of the patent: **04.01.2017**
(21) Application number: 14191855.7
(22) Date of filing: 05.11.2014
(51) Int. Cl.: H04W 16/10, H04W 84/00

(54) **Radio channel allocation method, radio channel allocation device, and communication system**
Funkkanalzuweisungsverfahren, Funkkanalzuweisungsvorrichtung und Kommunikationssystem
Procédé d'attribution de canal radio, dispositif d'allocation de canal radio et système de communication

(30) Priority: 11.11.2013 JP 2013232709; 04.08.2014 JP 2014158514
(43) Date of publication of application: 13.05.2015
(73) Proprietor: Mitsubishi Electric Corporation, Chiyoda-ku Tokyo 100-8310 (JP)
(72) Inventor: Shida, Tetsuro, Tokyo, 100-8310 (JP)
(74) Representative: Hoffmann Eitle

(56) References cited:
- EP-A1- 2 299 753
- WO-A1-00/57658
- US-A1- 2007 082 677

## Description

### TECHNICAL FIELD

The present invention relates to a radio channel allocation method in a plurality of intra-cell radio networks, a radio channel allocation device for allocating radio channels to a plurality of intra-cell radio networks, and a communication system including the plurality of intra-cell radio networks and the radio channel allocation device.

### BACKGROUND ART

In a radio network such as a wireless LAN (Local Area Network), an access point communicates with a plurality of station terminals (radio terminals) in the radio network through individual radio channels. In a plurality of radio networks located adjacent to each other, it is necessary to take measures so as not to cause mutual interference between a plurality of transmission radio waves to be used in a plurality of radio networks.

Conventionally, in order to reduce interference of radio waves between radio networks located adjacent to each other, there is proposed a method of collecting information about radio channels being used by the radio networks located in surrounding areas and selecting another radio channel which causes little interference with the radio channels being used by the radio networks located in the surrounding areas, as a radio channel to be set at present (see Patent Reference 1, for example).

There is also proposed a wireless LAN communication device which determines a radio channel spaced by the number (a radio frequency) of extension channels to be possibly used by another wireless LAN communication device from a basic channel being used by the another wireless LAN communication device, as a basic channel of its own device (see Patent Reference 2, for example).

EP 2 299 753 A1, relates to an adaptive traffic and interference aware radio resource management and proposes adjusting radio resource block allocation based on traffic demand scenarios. The resource blocks are assigned according to a traffic and interference aware process, TIAMA.

US 2007/0082677 A1, relates to an automated configuration of RF WLANs via selected sensors and proposes refining radio frequency coverage maps using estimated location of wireless clients and corresponding signal strength values.

### PRIOR ART REFERENCE

### PATENT REFERENCE

Patent Reference 1: Japanese Patent Application Publication No. 2004-274765
Patent Reference 2: Japanese Patent Application Publication No. 2007-096786

### SUMMARY OF THE INVENTION

### PROBLEMS TO BE SOLVED BY THE INVENTION

However, the above-mentioned conventional arts are techniques for improving communication performance of a single radio network in the plurality of radio networks or a single wireless LAN communication device, and are not techniques for optimizing communication performance of the whole communication system including the plurality of radio networks. Therefore, for example, if each of the plurality of radio networks or each of the plurality of wireless LAN communication devices selects a radio channel independently according to the above-mentioned conventional arts, there is a probability that each of the plurality of radio networks located adjacent to each other selects a radio channel of the same radio frequency band. Furthermore, if a certain radio network or a certain wireless LAN communication device achieves excellent communication performance by selecting a radio channel less causing occurrence of radio wave interference, there may be a situation where other radio networks or other wireless LAN communication devices cannot set optimum radio channels and thus cannot achieve excellent communication performance.

Further, for example, when in data distribution (data distribution based on a wireless LAN of a 2.4 GHz band, for example) by a communication system, in which radio channels of a plurality of different radio frequency bands which cause no mutual interference are available, concentrated use on one of the plurality of radio channels causes the data distribution through the radio channel being intensively used to require a long time. Therefore, there is a problem that start of a service to be executed after all the data distribution has been completed is delayed.

Therefore, the present invention is made to solve the problems in the above-mentioned conventional arts, and an object of the present invention is to provide a radio channel allocation method, a radio channel allocation device and a communication system, which can improve communication performance of the whole communication system including a plurality of intra-cell radio networks.

### MEANS OF SOLVING THE PROBLEM

The object is solved by the features of the independent claims. Preferred embodiments are described in the dependent claims.

According to an example, a radio channel allocation method allocates radio channels to each of a plurality of intra-cell radio networks in a communication system that includes the plurality of intra-cell radio networks including a radio terminal, an inter-cell network, and a plurality of gateway terminals for relaying communication between the plurality of intra-cell radio networks and the inter-cell network, the plurality of gateway terminals setting each radio channel to be used in the plurality of intra-cell radio networks. The radio channel allocation method includes the steps of: executing a first process of determining a plurality of radio channel allocation patterns for allocating radio channels to the plurality of intra-cell radio networks so that mutually different radio channels are set between adjacently located intra-cell radio networks of the plurality of intra-cell radio networks; repeating a second process of selecting a radio channel allocation pattern from among the plurality of radio channel allocation patterns and supplying a radio channel allocation changeover instruction signal based on the selected radio channel allocation pattern to the plurality of gateway terminals, while the selected radio channel allocation pattern in the plurality of radio channel allocation patterns is changed to a different radio channel allocation pattern one after another; and acquiring position information, wherein when the position information satisfies a predetermined condition, the second process is executed.

According to another example, a radio channel allocation device allocates radio channels to each of a plurality of intra-cell radio networks in a communication system that includes the plurality of intra-cell radio networks including a radio terminal, an inter-cell network, and a plurality of gateway terminals for relaying communication between the plurality of intra-cell radio networks and the inter-cell network, the plurality of gateway terminals setting each radio channel to be used in the plurality of intra-cell radio networks. The radio channel allocation device includes: a radio channel allocation pattern decision unit for executing a first process of determining a plurality of radio channel allocation patterns for allocating radio channels to the plurality of intra-cell radio networks so that mutually different radio channels are set between adjacently located intra-cell radio networks of the plurality of intra-cell radio networks; a radio channel allocation changeover notification control unit for repeating a second process of selecting a radio channel allocation pattern from among the plurality of radio channel allocation patterns and supplying a radio channel allocation changeover instruction signal based on the selected radio channel allocation pattern to the plurality of gateway terminals, while the selected radio channel allocation pattern in the plurality of radio channel allocation patterns is changed to a different radio channel allocation pattern one after another; and a position information acquisition unit for acquiring position information, wherein when the position information acquired by the position information acquisition unit satisfies a predetermined condition, the second process is executed.

According to a further example, a communication system includes: a plurality of intra-cell radio networks including a radio terminal; an inter-cell network; a plurality of gateway terminals for relaying communication between the plurality of intra-cell radio networks and the inter-cell network; and a radio channel allocation device for allocating radio channels to the plurality of intra-cell radio networks. The radio channel allocation device includes: a radio channel allocation pattern decision unit for executing a first process of determining a plurality of radio channel allocation patterns for allocating radio channels to the plurality of intra-cell radio networks so that mutually different radio channels are set between adjacently located intra-cell radio networks of the plurality of intra-cell radio networks; a radio channel allocation changeover notification control unit for repeating a second process of selecting a radio channel allocation pattern from among the plurality of radio channel allocation patterns and supplying a radio channel allocation changeover instruction signal based on the selected radio channel allocation pattern to the plurality of gateway terminals, while the selected radio channel allocation pattern in the plurality of radio channel allocation patterns is changed to a different radio channel allocation pattern one after another; and a position information acquisition unit for acquiring position information, wherein when the position information acquired by the position information acquisition unit satisfies a predetermined condition, the second process is executed.

### EFFECTS OF THE INVENTION

In the present invention, a first process of determining a plurality of radio channel allocation patterns is executed so that mutually different radio channels are set between adjacently located intra-cell radio networks of the plurality of intra-cell radio networks, and then a second process of selecting a radio channel allocation pattern from among the plurality of radio channel allocation patterns that has been determined and supplying a radio channel allocation changeover command signal based on the selected pattern to the plurality of gateway terminals is repeated while the radio channel allocation pattern is changed to a different radio channel allocation pattern one after another. Therefore, according to the present invention, radio wave interference between the intra-cell radio networks located adjacent to each other can be avoided, and when evaluation is made with a long time in which a plurality of changeovers of the radio channel allocation patterns takes place, variations in communication performance between the plurality of intra-cell radio networks can be made small. Since the minimum value of a communication speed in the intra-cell radio network is improved by lessening the variations in the communication performance between the intra-cell radio networks, a time required when data is transmitted to a plurality of radio terminals belonging to the plurality of inter-cell networks can also be shortened. As described above, according to the present invention, the communication performance of the whole communication system can be improved.

### BRIEF DESCRIPTION OF THE DRAWINGS

FIG. 1 is a diagram schematically showing a configuration of a communication system according to a first embodiment of the present invention.
FIG. 2 is a block diagram schematically showing a configuration of a gateway terminal shown in FIG. 1.
FIG. 3 is a block diagram schematically showing a configuration of a gateway terminal that is a radio channel allocation device shown in FIG. 1.
FIG. 4 is a block diagram showing in detail the configuration of the gateway terminal that is the radio channel allocation device shown in FIG. 1 and FIG. 3.
FIG. 5 is a block diagram showing an example of a configuration of a control unit in the gateway terminal that is the radio channel allocation device shown in FIG. 3 and FIG. 4.
FIG. 6 is a block diagram schematically showing a configuration of a radio display terminal shown in FIG. 1.
FIG. 7 is a diagram showing a plurality of cars (cells) forming a train, in which the communication system according to the first embodiment is mounted.
FIG. 8 is a diagram showing, in the form of a table, an example of the numbers of carry-on radio terminals using radio channels in each car of the train, in which the communication system according to the first embodiment is mounted.
FIG. 9 is a diagram showing, in the form of a table, an example of time ratios of the radio channels that can be used in radio communication by intra-car radio networks in each car of the train, in which the communication system according to the first embodiment is mounted.
FIG. 10 is a diagram showing, in the form of a table, an example of radio channel allocation patterns in the intra-car radio networks of the communication system according to the first embodiment.
FIG. 11 is a diagram showing an example in which the radio channels of the intra-car radio networks of the communication system according to the first embodiment vary at intervals of a constant time period.
FIG. 12 is a diagram showing an example of points and sections, through which the train containing the communication system according to the first embodiment passes.
FIG. 13 is a diagram showing an example in which the radio channels of the intra-car radio networks in the communication system according to the first embodiment are changed at predetermined points.
FIG. 14 is a diagram schematically showing a configuration of a modified example of the communication system according to the first embodiment.
FIG. 15 is a block diagram schematically showing a configuration of a server that is the radio channel allocation device shown in FIG. 14.
FIG. 16 is a diagram schematically showing a configuration of a communication system according to a second embodiment of the present invention.
FIG. 17 is a block diagram schematically showing a configuration of a gateway terminal shown in FIG. 16.
FIG. 18 is a block diagram schematically showing a configuration of a gateway terminal that is a radio channel allocation device shown in FIG. 16.
FIG. 19 is a block diagram showing in detail the configuration of the gateway terminal that is the radio channel allocation device shown in FIG. 16 and FIG. 18.
FIG. 20 is a block diagram schematically showing a configuration of a radio monitor camera terminal shown in FIG. 16.
FIG. 21 is a plan view schematically showing an arrangement of a plurality of monitor areas in which the communication system according to the second embodiment is provided.
FIG. 22 is a diagram showing, in the form of a table, radio channel allocation patterns in intra-area radio networks of the communication system according to the second embodiment.

### MODE FOR CARRYING OUT THE INVENTION

### First Embodiment

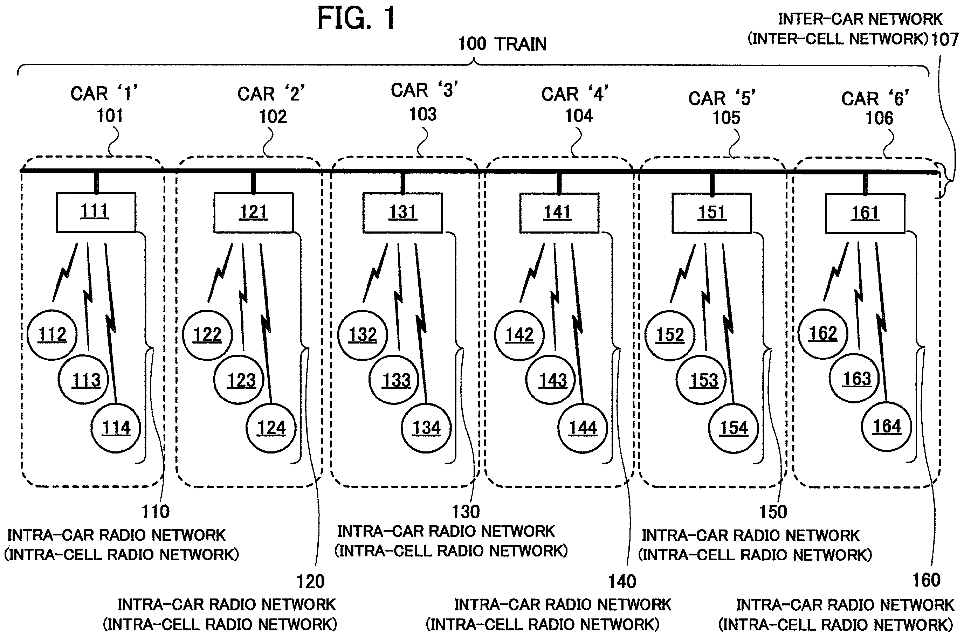

FIG. 1 is a diagram schematically showing a configuration of a communication system according to a first embodiment of the present invention. The communication system according to the first embodiment is a train communication system mounted in a train 100 including a plurality of cars 101, 102, 103, 104, 105 and 106 interconnected to one another. Further, the communication system according to the first embodiment is a system that can execute a radio channel allocation method to which the present invention is applied. Although a case where the number of the cars is six is shown in FIG. 1, the number of the cars may be another number different from six, so long as the number of the cars is two or higher.

The communication system according to the first embodiment improves communication performance of the whole communication system by performing radio channel allocation so as to reduce variations of the communication performance (that is, differences of the communication performance) of each of a plurality of intra-cell radio networks, in the plurality of intra-cell radio networks forming this communication system. In FIG. 1, cells are the cars forming the train 100, that is, car '1' 101, car '2' 102, car '3' 103, car '4' 104, car '5' 105 and car '6' 106. Thus, a single cell corresponds to a single car. An intra-cell radio network is formed in each car. In the first embodiment, the intra-cell radio networks are intra-car radio networks 110, 120, 130, 140, 150 and 160 formed in car '1' 101, car '2' 102, car '3' 103, car '4' 104, car '5' 105 and car '6' 106 respectively. The intra-car radio networks 110, 120, 130, 140, 150 and 160 are connected to each other through an inter-cell network so as to be capable of communicating with each other. In the first embodiment, the inter-cell network is an inter-car network 107.

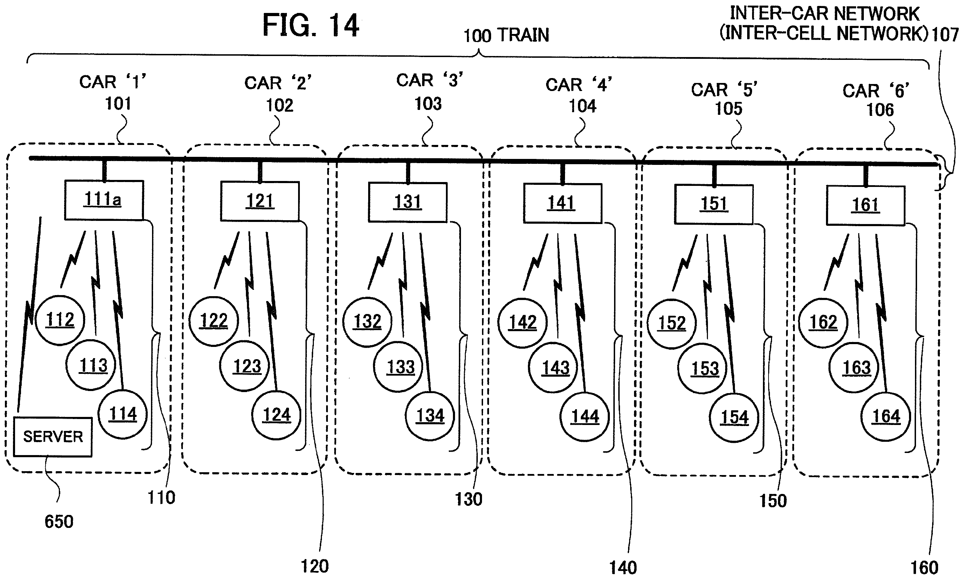

As shown in FIG. 1, the communication system according to the first embodiment includes the plurality of intra-car radio networks 110, 120, 130, 140, 150 and 160; the inter-car network 107; and a plurality of gateway terminals 111, 121, 131, 141, 151 and 161 as network nodes for relaying communication between the plurality of intra-car radio networks 110, 120, 130, 140, 150 and 160 and the inter-car network 107. The plurality of intra-car radio networks 110, 120, 130, 140, 150 and 160 and the inter-car network 107 are connected through the plurality of gateway terminals 111, 121, 131, 141, 151 and 161 so as to be capable of communicating, and therefore the plurality of gateway terminals 111, 121, 131, 141, 151 and 161 can communicate with each other. Each of the intra-car radio networks 110, 120, 130, 140, 150 and 160 includes at least one radio terminal as a communication terminal. In each of the intra-car radio networks 110, 120, 130, 140, 150 and 160, the communication between the radio terminal and the gateway terminals 111, 121, 131, 141, 151 and 161 is carried out by radio communication. Although the communication of the gateway terminals 111, 121, 131, 141, 151 and 161 and the inter-car network 107 is generally wired communication, it can also be achieved by radio communication or by a combination of wired communication and radio communication. Further, in FIG. 1, the gateway terminal 111 includes a configuration of a radio channel allocation device for allocating radio channels (radio frequencies) to be used in each of the intra-car radio networks 110, 120, 130, 140, 150 and 160. Furthermore, in FIG. 1, the gateway terminals 121, 131, 141, 151 and 161 have substantially the same configuration. In the first embodiment, at least one of the gateway terminals 111, 121, 131, 141, 151 and 161 has a radio network allocating function in the communication system shown in FIG. 1. In the first embodiment, for example, explanation will be made in connection with a case where the gateway terminal 111 operates as a radio network allocation device. However, the gateway terminal having the configuration of the radio channel allocation device may be a terminal other than the gateway terminal 111. Further, the radio network allocation device may also be a device other than the gateway terminals 111, 121, 131, 141, 151 and 161 (for example, a server 650 in FIG. 14 to be described later or another device).

In FIG. 1, the intra-car radio network 110 in car '1' 101 includes radio display terminals 112, 113 and 114 each having an image display function, as the radio terminals. The intra-car radio network 120 in car '2' 102 includes radio display terminals 122, 123 and 124 each having an image display function, as the radio terminals. The intra-car radio network 130 in car '3' 103 includes radio display terminals 132, 133 and 134 each having an image display function, as the radio terminals. The intra-car radio network 140 in car '4' 104 includes radio display terminals 142, 143 and 144 each having an image display function, as the radio terminals. The intra-car radio network 150 in car '5' 105 includes radio display terminals 152, 153 and 154 each having an image display function, as the radio terminals. The intra-car radio network 160 in car '6' 106 includes radio display terminals 162, 163 and 164 each having an image display function, as the radio terminals. However, the number of the radio display terminals included in each of the intra-car radio networks 110, 120, 130, 140, 150 and 160 is not limited to three and may be other numbers. Further, the numbers of the radio display terminals included in the respective intra-car radio networks 110, 120, 130, 140, 150 and 160 are not required to be the same and may be set to be different from each other.

A radio communication scheme used in the intra-car radio networks 110, 120, 130, 140, 150 and 160 is not limited to a specific radio communication scheme. For example, the intra-car radio networks 110, 120, 130, 140, 150 and 160 may be wireless LANs based on IEEE 802.11g. Although the wireless LAN based on IEEE 802.11g uses a 2.4 GHz band, available radio channels (radio frequencies) are determined generally by law of each country and are slightly different depending on the country. In Japan, it is permitted to use channel 1 (1ch) to channel 13 (13ch). For example, communicatable channels whose communication is not interfered with each other are channel 1 (1ch), channel 6 (6ch) and channel 11 (11ch) which are set to be spaced by every five channels. When channels to be used are set to be spaced by every five channels, the maximum number of available channels can be set to three channels. In this connection, as available channels without mutual communication interference, a combination of channel 2 (2ch), channel 7 (7ch) and channel 12 (12ch) or a combination of channel 3 (3ch), channel 8 (8ch) and channel 13 (13ch) may also be employed in place of a combination of channel 1 (1ch), channel 6 (6ch) and channel 11 (11ch). Furthermore, when different communication schemes are used, the combinations of communicatable channels whose communication is not interfered with each other may be different ones.

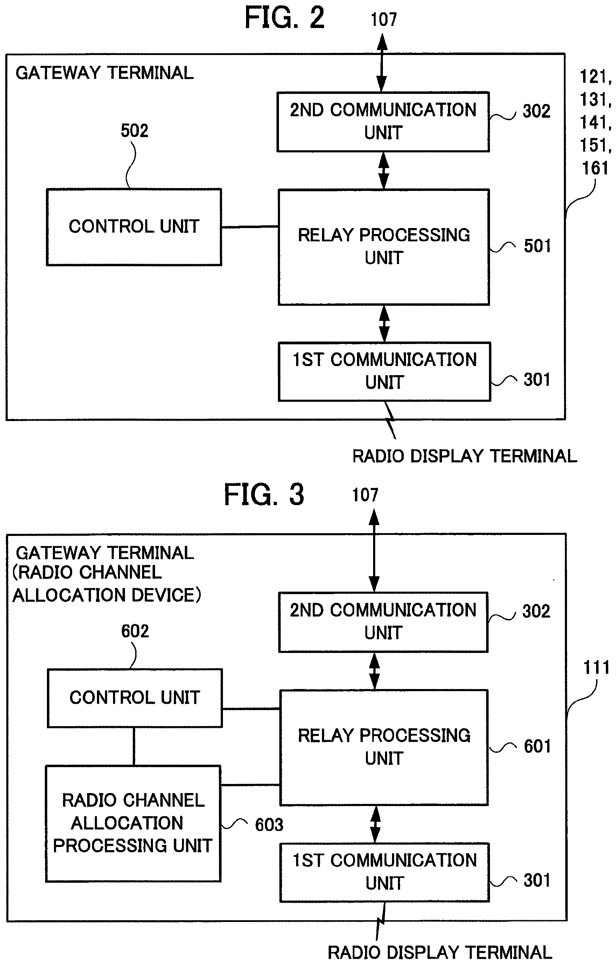

FIG. 2 is a block diagram schematically showing a configuration of the gateway terminals 121, 131, 141, 151 and 161 shown in FIG. 1. As shown in FIG. 2, each of the gateway terminals 121, 131, 141, 151 and 161 includes a first communication unit 301 for performing radio communication with a radio terminal; a second communication unit 302 for performing wired communication with the inter-cell network 107; a relay processing unit 501 for relaying the first communication unit 301 and the second communication unit 302 to make it possible to communicate between them; and a control unit 502 for controlling operation of the respective units. Each of the gateway terminals 121, 131, 141, 151 and 161 receives an instruction signal of the radio channel allocation from the radio network allocation device, and each of the first communication units 301 in the gateway terminals 121, 131, 141, 151 and 161 changes the radio channel to be used for communication with the radio display terminal according to the received instruction signal.

FIG. 3 is a block diagram schematically showing a configuration of the gateway terminal 111 as the radio channel allocation device. As shown in FIG. 3, the gateway terminal 111 includes the first communication unit 301 for performing radio communication with the radio terminal; the second communication unit 302 for performing wired communication with the inter-cell network 107; a relay processing unit 601 for relaying the first communication unit 301 and the second communication unit 302 to make it possible to communicate between them; a control unit 602 for controlling operation of the respective units; and a radio channel allocation processing unit 603 for performing radio channel allocating operation. In the gateway terminal 111, the radio channel allocation processing unit 603 generates instruction signals of the radio channel allocation according to instructions received from the control unit 602, and transmits them to the gateway terminals 121, 131, 141, 151 and 161 respectively. The first communication unit 301 of the gateway terminal 111 and the gateway terminals 121, 131, 141, 151 and 161 that have received the instruction signal will change the radio channel to be used for communication with the radio display terminals according to the received instruction signal.

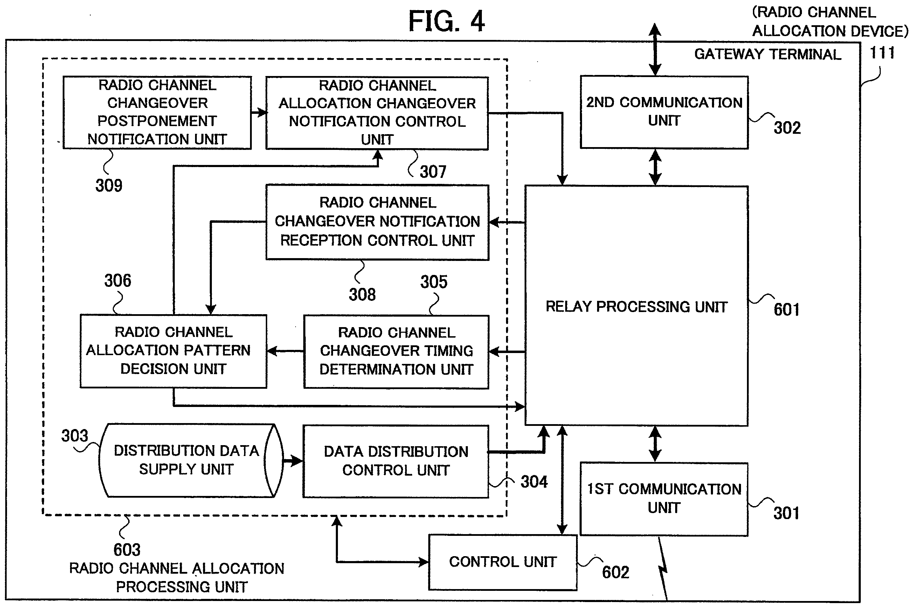

FIG. 4 is a block diagram showing in detail the configuration of the gateway terminal 111 that is the radio channel allocation device shown in FIG. 1 and FIG. 3. In other words, FIG. 4 is a block diagram showing the configuration related to the radio channel allocation of the gateway terminal having a radio channel allocating function (i.e., an example in which part of the gateway terminal is the radio channel allocation device). As shown in FIG. 4, the gateway terminal having the radio channel allocating function is at least one of the gateway terminals 111, 121, 131, 141, 151 and 161, and in the first embodiment, it is the gateway terminal 111. The gateway terminal having the radio channel allocating function includes, as the configuration related to the radio channel allocation, a distribution data supply unit 303, a data distribution control unit 304, a radio channel changeover timing determination unit 305, a radio channel allocation pattern decision unit 306, a radio channel allocation changeover notification control unit 307, a radio channel changeover notification reception control unit 308, and a radio channel changeover postponement notification unit 309. In this connection, the configuration not related to the radio channel allocation in the gateway terminal having the radio channel allocating function, for example, the relay processing unit 601 provided to connect the first communication unit 301 and the second communication unit 302, has a function similar to the relay processing unit 501 shown in FIG. 2 and additionally performs communication between the radio channel allocation processing unit 603 and the inter-car network 107 and communication between the radio channel allocation processing unit 603 and the intra-car radio network.

The first communication unit 301 communicates with the radio display terminals via any (for example, the intra-car radio network 110) of the intra-car radio networks. The second communication unit 302 communicates with the gateway terminals of the other cars in the train 100 via the inter-car network 107. The distribution data supply unit 303 stores distribution data to be distributed to the radio display terminals via the intra-car radio network (for example, the intra-car radio network 110), and the data distribution control unit 304 performs communication control to distribute the distribution data supplied from the distribution data supply unit 303 via the first communication unit 301. In this connection, the distribution data supply unit 303 may store the distribution data to be supplied to the radio display terminals of the other intra-car radio networks (for example, the intra-car radio networks 120, 130, 140, 150 and 160) via the inter-car network 107.

The radio channel changeover timing determination unit 305 determines changeover timing of the radio channel allocation. The radio channel allocation pattern decision unit 306 decides on allocation patterns of the plurality of radio channels. The radio channel allocation changeover notification control unit 307 performs communication control to notify radio channel allocation patterns decided by the radio channel allocation pattern decision unit 306 through the second communication unit 302 via the inter-car networks 107 to the gateway terminals of the other cars in the train 100. The radio channel changeover notification reception control unit 308 performs communication control to receive the radio channel allocation patterns notified from the gateway terminals of the other cars in the train 100 through the second communication unit 302 via the inter-car networks 107. The radio channel changeover postponement notification unit 309 causes the gateway terminals of the other cars in the train 100 to temporarily postpone processes of transmitting the radio channel allocation patterns.

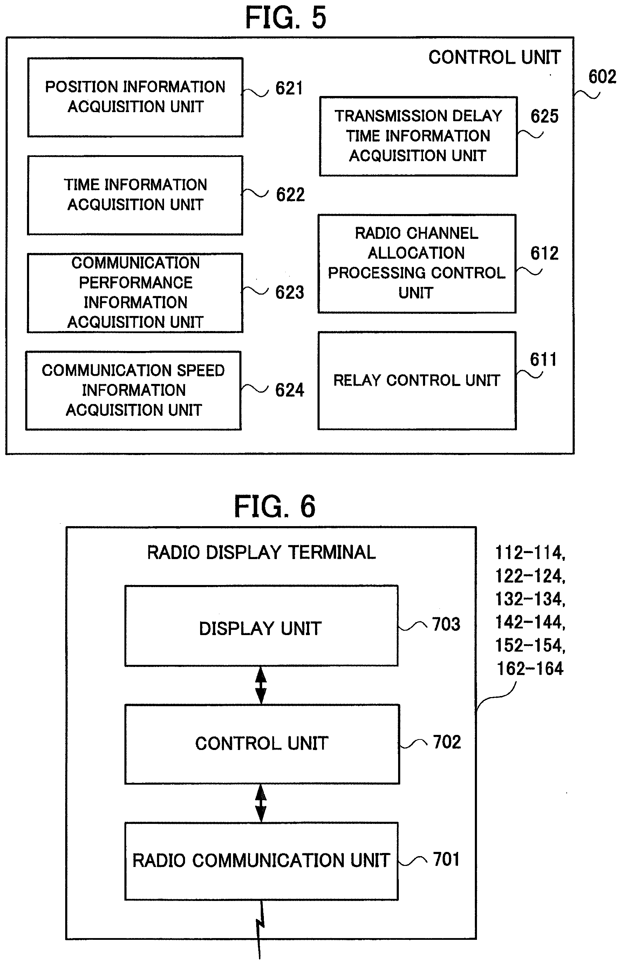

FIG. 5 is a block diagram of an example of a configuration of the control unit 602 of the gateway terminal 111 that is the radio channel allocation device shown in FIG. 3 and FIG. 4. The control unit 602 includes a relay control unit 611 for controlling operation of the relay processing unit 601, and a radio channel allocation processing control unit 612 for controlling operation of the radio channel allocation processing unit 603. The control unit 602 may include at least one of the following units: a position information acquisition unit 621, a time information acquisition unit 622, a communication performance information acquisition unit 623, a communication speed information acquisition unit 624, and a transmission delay time information acquisition unit 625. The position information acquisition unit 621 acquires position information of the train 100 by measuring a position of the train 100 or by receiving position information thereof. The time information acquisition unit 622 acquires time information by measuring or receiving time information or a time elapsed from a reference time. The communication performance information acquisition unit 623 receives radio communication performance information on the plurality of the intra-car radio networks, for example, from each of the gateway terminals of the plurality of intra-car radio networks. The communication speed information acquisition unit 624 receives radio communication speed information on the plurality of intra-car radio networks, for example, from each of the gateway terminals. The transmission delay time information acquisition unit 625 receives transmission delay times in the radio communication of the plurality of intra-car radio networks, for example, from each of the gateway terminals. The position information acquisition unit 621, the time information acquisition unit 622, the communication performance information acquisition unit 623, the communication speed information acquisition unit 624 and the transmission delay time information acquisition unit 625 are configurations for acquiring information necessary to determine the changeover timing of the radio channel allocation pattern, but they are not necessarily necessary units.

FIG. 6 is a block diagram schematically showing a configuration of any of the radio display terminals 112-114, 122-124, 132-134, 142-144, 152-154, and 162-164 shown in FIG. 1. The radio display terminal includes a radio communication unit 701 for performing radio communication with the gateway terminal, a display unit 703 such as a liquid crystal panel, and a control unit 702 for causing the display unit 703 to display an image corresponding to video data received at the radio communication unit 701.

In the communication system according to the first embodiment, there may be a situation where radio waves used in the radio communication in any ones of the intra-car radio networks 110, 120, 130, 140, 150 and 160 located in the adjacent cars are interfered with each other and another situation where radio wave congestion takes place in a certain radio channel (radio frequency). For this reason, to avoid the interference between the radio waves of the same radio frequency band in the adjacently located intra-car radio networks, mutually different radio channels are set as the radio channels to be used. In other words, for example, the radio channels are allocated so that the intra-car radio networks 110, 120, 130, 140, 150 and 160 use any of three channels of channel 1 (1ch), channel 6 (6ch) and channel 11 (11ch) and the mutually different radio channels are allocated to the intra-car radio networks located adjacent to each other. In FIG. 1, for example, the adjacently located intra-car radio networks correspond to the intra-car radio networks 110 and 120, the intra-car radio networks 120 and 130, the intra-car radio networks 130 and 140, the intra-car radio networks 140 and 150, or the intra-car radio networks 150 and 160.

In the first embodiment, the gateway terminal (for example, the gateway terminal 111) having the radio channel allocating function performs the following processes to allocate the radio channels to the plurality of intra-car radio networks 110, 120, 130, 140, 150 and 160. Firstly, a pattern deciding process (first process) of determining a plurality of radio channel allocation patterns allowing radio channels to be allocated to the plurality of intra-car radio networks 110, 120, 130, 140, 150 and 160 is executed so that mutually different radio channels are allocated to adjacently located ones of the plurality of intra-car radio networks 110, 120, 130, 140, 150 and 160. Secondly, a radio channel allocation pattern selecting and instructing process (second process) of selecting one of the plurality of radio channel allocation patterns (for example, first, second and third patterns) and of supplying a radio channel allocation changeover instruction signal based on the selected radio channel allocation pattern to any or all of the plurality of gateway terminals 111, 121, 131, 141, 151 and 161 is executed. The pattern selecting and instructing process (second process) is repetitively executed while the radio channel allocation pattern selected from among the plurality of radio channel allocation patterns is changed to a different radio channel allocation pattern one after another. In this connection, information indicating which cells are adjacent to each other is previously stored in the server provided in any of the gateway terminals or in the communication system. Details of this process will be described later.

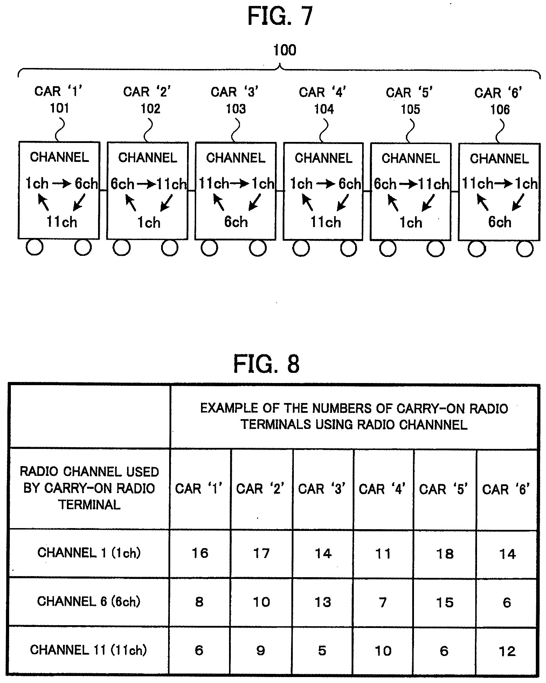

FIG. 7 is a diagram showing an example of the plurality of cars (cells) forming the train 100 in which the communication system according to the first embodiment is mounted and the radio channel allocation. In FIG. 7, when channel 1 (1ch) is a radio channel to be used by the intra-car radio network 110 formed in car '1' 101; channel 6 (6ch) is set as a radio channel to be used by the intra-car radio network 120 formed in car '2' 102, channel 11 (11ch) is set as a radio channel to be used by the intra-car radio network 130 formed in car '3' 103, channel 1 (1ch) is set as a radio channel to be used by the intra-car radio network 140 formed in car '4' 104, channel 6 (6ch) is set as a radio channel to be used by the intra-car radio network 150 formed in car '5' 105, and channel 11 (11ch) is set as a radio channel to be used by the intra-car radio network 160 formed in car '6' 106. Further, in FIG. 7, when channel 6 (6ch) is a radio channel to be used by the intra-car radio network 110 formed in car '1' 101; channel 11 (11ch) is set as a radio channel to be used by the intra-car radio network 120 formed in car '2' 102, channel 1 (1ch) is set as a radio channel to be used by the intra-car radio network 130 formed in car '3' 103, channel 6 (6ch) is set as a radio channel to be used by the intra-car radio network 140 formed in car '4' 104, channel 11 (11ch) is set as a radio channel to be used by the intra-car radio network 150 formed in car '5' 105, and channel 1 (1ch) is set as a radio channel to be used by the intra-car radio network 160 provided in car '6' 106. Furthermore, in FIG. 7, when channel 11 (11ch) is a radio channel to be used by the intra-car radio network 110 formed in car '1' 101; channel 1 (1ch) is set as a radio channel to be used by the intra-car radio network 120 formed in car '2' 102, channel 6 (6ch) is set as a radio channel to be used by the intra-car radio network 130 formed in car '3' 103, channel 11 (11ch) is set as a radio channel to be used by the intra-car radio network 140 formed in car '4' 104, channel 1 (1ch) is set as a radio channel to be used by the intra-car radio network 150 formed in car '5' 105, and channel 6 (6ch) is set as a radio channel to be used by the intra-car radio network 160 formed in car '6' 106.

For example, the same radio channel is allocated to the intra-car radio network 110 of car '1' 101 and to the intra-car radio network 140 of car '4' 104. This is because car '1' 101 and car '4' 104 are not located adjacent to each other and are spaced by a distance corresponding to length of two cars, so that a radio wave transmitted in the intra-car radio network 110 is sufficiently attenuated at a position of car '4' 104 and a radio wave transmitted in the intra-car radio network 140 is sufficiently attenuated at a position of car '1' 101. In other words, interference or congestion less takes place between the radio communication in the intra-car radio network 110 and the radio communication in the intra-car radio network 140, and therefore each of them makes it possible to achieve excellent radio communication.

FIG. 8 is a diagram showing, in the form of a table, an example of the numbers of carry-on radio terminals using radio channels in each car of the train 100, in which the communication system according to the first embodiment is mounted. The term "carry-on radio terminal" is a radio communication device other than the radio display terminals as parts of the intra-car radio networks 110, 120, 130, 140, 150 and 160 and is, for example, the radio communication device such as a personal computer (PC), a smartphone, a tablet type device, a portable game device and other devices. When a passenger uses the carry-on radio terminal in the train 100, for example, radio waves of the radio channels used by the intra-car radio networks 110, 120, 130, 140, 150 and 160 may, in some cases, interfere with a radio wave transmitted from the carry-on radio terminal, or congestion may, in some cases, take place in the radio waves used by the radio channels. For example, when the intra-car radio network 110 formed in car '1' 101 uses channel 1 (1ch) as a radio channel, use of the carry-on radio terminal by a passenger riding in car '1' 101 using channel 1 (1ch) causes radio wave interference. Similarly, when the intra-car radio network 120 formed in car '2' 102 uses channel 6 (6ch) as a radio channel, use of the carry-on radio terminal by a passenger riding in car '2' 102 using channel 6 (6ch) causes radio wave interference.

In the example of FIG. 8, the number of the carry-on radio terminals using channel 1 (1ch) in car '1' 101 is sixteen, the number of the carry-on radio terminals using channel 6 (6ch) is eight, and the number of the carry-on radio terminals using channel 11 (11ch) is six. The numbers of the carry-on radio terminals and the ratios of the radio channels being used by them in each car are not constant but vary with time. In many cases, generally speaking, the radio communication uses channel 1 (1ch). This is considered to be caused by the fact that, when the carry-on radio terminal searches for an available radio channel, in many cases, the terminal searches for it sequentially from a specific channel, which is usually channel 1 (1ch). In this way, in general, the radio channels used by the carry-on radio terminals are biased.

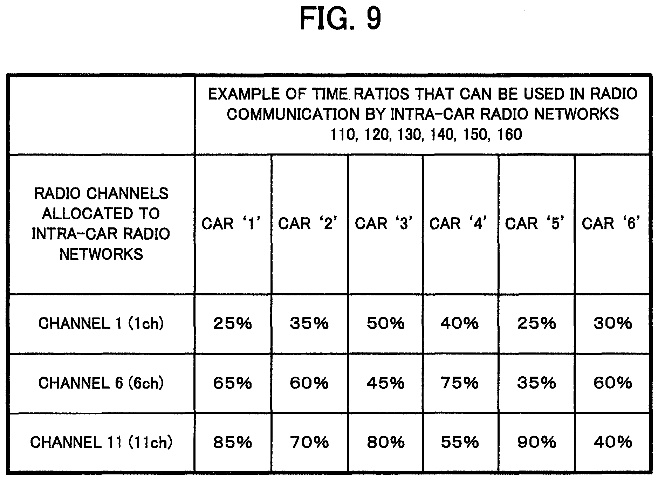

FIG. 9 is a diagram showing, in the form of a table, an example of time ratios of the radio channels that can be used in radio communication by the intra-car radio networks 110, 120, 130, 140, 150 and 160 in each car of the train 100, in which the communication system according to the first embodiment is mounted. As shown in FIG. 9, for example, when channel 1 (1ch) is used in car '1' 101, it is permitted to use the radio communication only for a time of 25%; whereas when channel 6 (6ch) is used in car '1' 101, it is permitted to use the radio communication for a time of 65%. Since the number of the carry-on radio terminals using channel 1 (1ch) in car '1' 101 is large, it is permitted to use the radio communication for a short time; whereas if a comparatively small number of carry-on radio terminals uses channel 6 (6ch), it is permitted to use the radio communication of the intra-car radio network 110 for a comparatively large time.

When data communication is carried out between the gateway terminals of the respective intra-cell radio networks 110, 120 and 130 in car '1' 101, car '2' 102 and car '3' 103 and the radio display terminals, since available time for the radio communication is short in the intra-car radio network 110 in car '1' 101, to which channel 1 (1ch) is allocated as a radio channel, the communication speed becomes slow. On the other hand, since available time for the radio communications is long in the intra-car radio network 120 in car '2' 102 and the intra-car radio network 130 in car '3' 103 is long, the communication speed becomes comparatively high. Accordingly, in the distribution of the same quantity of data, a time required to distribute them in the intra-car radio network 110 in car '1' 101 becomes longer than a time required to distribute them in the intra-car radio network 120 of car '2' 102 and in the intra-car radio network 130 of the intra-car radio network 130 in car '3' 103.

When the intra-car radio networks 110, 120, 130, 140, 150 and 160 in the cars of the train communication system are used so that the intra-car radio networks distribute content data stored in the gateway terminal (for example, the gateway terminal 111) having a radio channel allocating function, in a broadcasting manner, to the radio display terminals 112, 113, 114, 122, 123, 124, 132, 133, 134, 142, 143, 144, 152, 153, 154, 162, 163 and 164 and reproduce the content data; there may be a situation where, regardless of the fact that the distribution of the content data has already been completed in the intra-car radio network 120 of car '2' 102 and the intra-car radio network 130 of car '3' 103, the distribution of the content data is not yet completed in the intra-car radio network 110 of car '1' 101. If the communication system is configured to be capable of starting the reproduction of the content data only after completion of the distribution of all the content data, there may be a problem that a time (start time point), at which the reproduction of the content data can be started, is influenced by the communication performance of the intra-car radio network, to which the channel whose communication state is the worst (for example, channel 1 (1ch)) is allocated.

This problem is caused by biased interference or congestion of the radio communication between the respective radio channels. For this reason, the intra-car radio networks 110, 120, 130, 140, 150 and 160 average the biased interference or congestion in each radio channel and reduce influence of bias, by changing over the radio channels to be used. The radio channels used in the intra-car radio networks 110, 120, 130, 140, 150 and 160 are changed over periodically at intervals of a predetermined time or when a predetermined condition is satisfied.

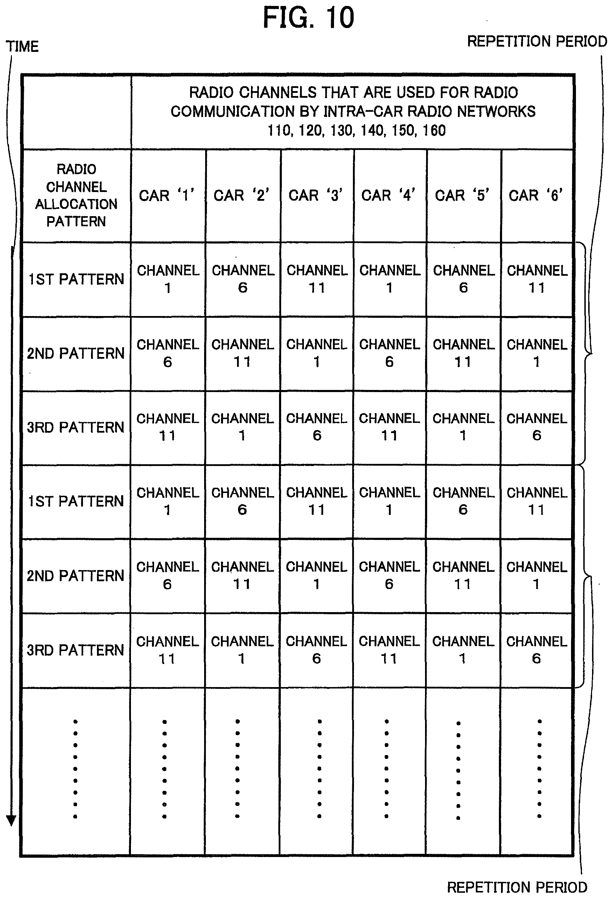

FIG. 10 is a diagram showing, in the form of a table, the radio channel allocation patterns in the intra-car radio networks 110, 120, 130, 140, 150 and 160 of the communication system according to the first embodiment. For example, as shown in FIG. 10, the first to third patterns are previously set as the radio channel allocation patterns and any of these allocation patterns is selected. In this way, the radio channel allocation patterns are previously set so as to set mutually different radio channels at the mutually adjacent intra-car radio networks. Therefore, when changeover of the radio channels is required, the radio channels to be allocated to the respective intra-car radio networks 110, 120, 130, 140, 150 and 160 can be quickly determined only by informing the respective intra-car radio networks 110, 120, 130, 140, 150 and 160 of the radio channel allocation patterns.

Further, in the communication system according to the first embodiment, the radio channel allocation pattern is changed over in a predetermined order periodically or when the predetermined condition is satisfied (that is, each time the predetermined condition is satisfied) . In the intra-car radio network 110 of car '1' 101, channel 1 (1ch) is allocated in the first pattern, but channel 6 (6ch) is allocated in the second pattern, and channel 11 (11ch) is allocated in the third pattern. Such channel allocation is repeated at a predetermined repetition period. The radio channels to be allocated to the respective intra-car radio networks 110, 120, 130, 140, 150 and 160 are changed over in the predetermined order in this way. Therefore, when changeover of the radio channels is requested, the radio channels to be allocated to the intra-car radio networks 110, 120, 130, 140, 150 and 160 can be quickly determined only by informing the respective intra-car radio networks 110, 120, 130, 140, 150 and 160 of a radio channel allocation request.

Explanation will be made as to operation of the gateway terminal (for example, the gateway terminal 111) having the radio channel allocating function. The contents of the radio communication in the intra-car radio network are not specifically limited. In the first embodiment, however, explanation will be made in connection with a case where the content data stored in the gateway terminal (for example, the gateway terminal 111) having the radio channel allocating function to the radio display terminals is distributed in a broadcasting manner and reproduced. In the explanation of the following operation of the gateway terminal (for example, the gateway terminal 111) having the radio channel allocating function, the gateway terminal is generally connected to the intra-car radio network 110 of car '1' 101. However, the gateway terminal having the radio channel allocating function may be any of the gateway terminals 121, 131, 141, 151 and 161 connected to the intra-car radio networks 120, 130, 140, 150 and 160 of the other cars. Further, the radio channel allocating function may be provided to another device which is other than the gateway terminals and is connected to the inter-car network 107 to communicate therewith, for example, to a server or other devices.

The gateway terminal (for example, the gateway terminal 111) having the radio channel allocating function, when activated, selects the radio channels so that the same allocation pattern is selected for the intra-car radio networks 110, 120, 130, 140, 150 and 160 of the cars of the train 100. For example, the radio channel allocation pattern decision unit 306 may be configured so that the first pattern of the radio channel allocation patterns is selected and the same allocation pattern is selected for the intra-car radio networks 110, 120, 130, 140, 150 and 160 of the cars of the train 100 immediately after the activation. Alternatively, the same allocation pattern may be selected for respective the intra-car radio networks 110, 120, 130, 140, 150 and 160 of the cars of the train 100, by sending information on the allocation pattern decided by the radio channel allocation pattern decision unit 306 from the second communication unit 302 of the gateway terminal of car '1' 101 via the inter-car network 107 to all the gateway terminals of the other cars.

The former method will be explained herein. The radio channel allocation pattern decision unit 306 selects the first pattern from the radio channel allocation patterns, and informs the first communication unit 301 of the use of channel 1 (1ch) set as the radio channel to be used by the intra-car radio network 110 of car '1' 101. The first communication unit 301 that has received the information sets the radio channel to be used at channel 1 (1ch). The radio display terminals 112, 113 and 114 forming the intra-car radio network 110 of car '1' 101, when respectively activated, detect the radio channel to be used in the intra-car radio network 110 by searching for the radio channel to which a beacon signal is transmitted from the first communication unit 301, and then participate in the intra-car radio network 110 by using the detected radio channel.

The first communication unit 301 of the gateway terminal (for example, the gateway terminal 111) having the radio channel allocating function uses channel 1 (1ch) as the radio channel to communicate with the radio display terminals 112, 113 and 114 forming the intra-car radio network 110. The data distribution control unit 304 of the gateway terminal (for example, the gateway terminal 111) having the radio channel allocating function receives the content data distributed from the distribution data supply unit 303, and the gateway terminal in turn distributes the content data from the first communication unit 301 to the radio display terminals 112, 113 and 114.

When distributing the content data to the radio display terminals 112, 113 and 114, the first communication unit 301 may, in some cases, cause interference or congestion with a carry-on radio terminal that is present in car '1' 101 or in the periphery of car '1' 101 and uses the same channel 1 (1ch) as the radio channel. The carry-on radio terminal is, for example, a radio communication terminal carried by a passenger riding in car '1' 101 or another terminal. When the interference causes a packet error, an error recovery is possible by again transmitting the packet. However, this requires an additional transmission time and reduces the communication speed. Although in the case of occurrence of the congestion, the packet can be, in some cases, correctly transmitted, this produces a large transmission delay time and reduces the communication speed.

For the above reasons, the radio channel allocation pattern is changed so as to suppress the influences of the interference and congestion. Methods of generating timing of changing over the radio channel allocation pattern include a method of changing over the radio channel allocation pattern at intervals of a predetermined time, a method based on the traveling places of the train 100, a method based on the communication speeds of the intra-car radio networks 110, 120, 130, 140, 150 and 160, and a method based on the transmission delay times of the intra-car radio networks 110, 120, 130, 140, 150 and 160. These methods will be explained in the following.

Explanation will first be made as to a case where a method of changing over the radio channel allocation pattern periodically at intervals of a predetermined time is employed. In this case, information acquired by the time information acquisition unit 622 shown in FIG. 5 is used. A changeover time period T of the radio channel is previously set in the radio channel changeover timing determination unit 305. The changeover time period is not specifically limited. However, setting of a too-short time for the changeover time period may cause overhead of a time required in the changeover operation of the radio channel and reduction of the communication performance. On the other hand, if a too long time is set, a time period when the intra-car radio network uses one radio channel becomes longer. Therefore, the influence of the communication state of the radio network is enhanced and thus a merit of the changeover the radio channel is lessened.

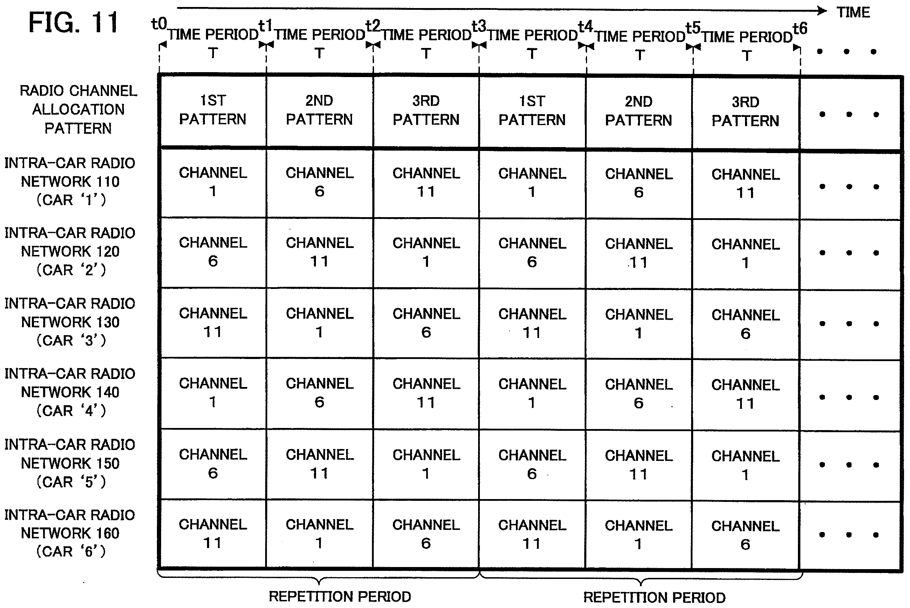

FIG. 11 is a diagram showing an example in which the radio channels of the intra-car radio networks 110, 120, 130, 140, 150 and 160 in the communication system according to the first embodiment are changed at intervals of a constant time period. A radio channel changeover timing determination unit 305 notices the radio channel allocation pattern decision unit 306 of a changeover request of the radio channel allocation pattern that the radio channels are changed over at intervals of the predetermined changeover time period T. FIG. 11 shows an example in which the changeover of the radio channels at intervals of the predetermined time period T causes changes of the radio channels allocated to the respective intra-car radio networks 110, 120, 130, 140, 150 and 160 in car '1' 101 to car '6' 106. In the example, abscissa denotes time and the radio channels are changed over at intervals of the time period T. At a time t0, the first pattern of the radio channel allocation is set, and then at a time t1, the second pattern of the radio channel allocation is set. Thereafter, operation is carried out so that the third pattern of the radio channel allocation is set at a time t2 when the time period T has elapsed, and then the first pattern of the radio channel allocation is set at a time t3 when the time period T has elapsed further.

In this way, since the radio channels allocated to the intra-car radio networks 110, 120, 130, 140, 150 and 160 are periodically changed over, the system can be made less independent upon the communication state of a specific radio channel allocated to the respective intra-cell radio networks, and thus differences in the communication performances of the intra-cell radio networks can be made small. In the first embodiment, the radio channel set in each of the plurality of intra-car radio networks 110, 120, 130, 140, 150 and 160 before each time point (that is, time points t0, t1, t2, t3, t4, t5, t6 and so on in FIG. 11) when the radio channel allocation pattern is changed to a different one is different from that after the each time point.

For example, at a time before the time t1, the intra-car radio networks 110, 120, 130, 140, 150 and 160 set 1ch, 6ch, 11ch, 1ch, 6ch and 11ch respectively according to the first pattern, whereas at a time after the time t1, the inter-car radio networks 110, 120, 130, 140, 150 and 160 set 6ch, 11ch, 1ch, 6ch, 11ch and 1ch according to the second pattern.

If the plurality of radio channel allocation patterns are N radio channel allocation patterns and N is an integer of two or larger, each time the radio channel allocation pattern is changed N times to a different radio channel allocation pattern, the same radio channel allocation pattern as the radio channel allocation pattern selected before N times changeover is selected. In FIG. 11, a case where N = 3 is shown as an example, each time the radio channel allocation pattern is changed three times to a different radio channel allocation pattern, the same radio channel allocation pattern as the radio channel allocation pattern selected before three times changeover is selected. In this way, in FIG. 11, three times of the radio channel allocation patterns correspond to a repetition period of the patterns. In this connection, the radio channel allocation pattern may be arranged to be changed over to a different radio channel allocation pattern not at intervals of a predetermined time period but at each of predetermined time points.

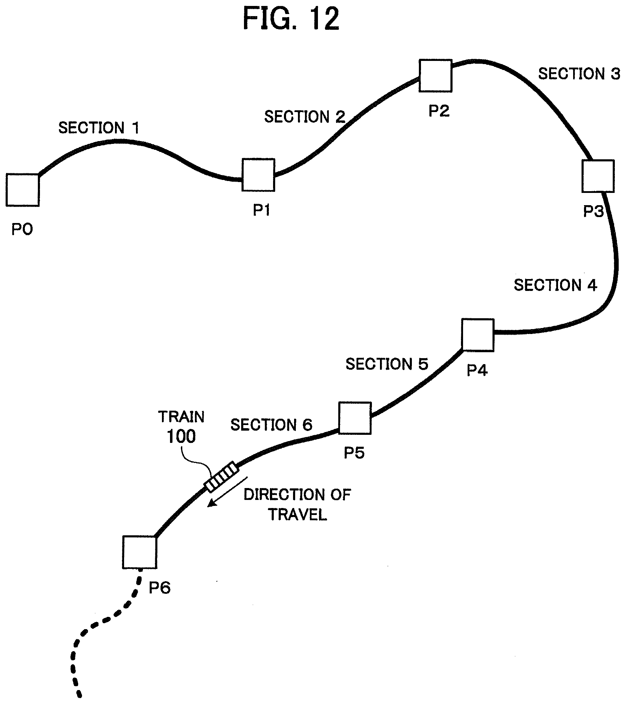

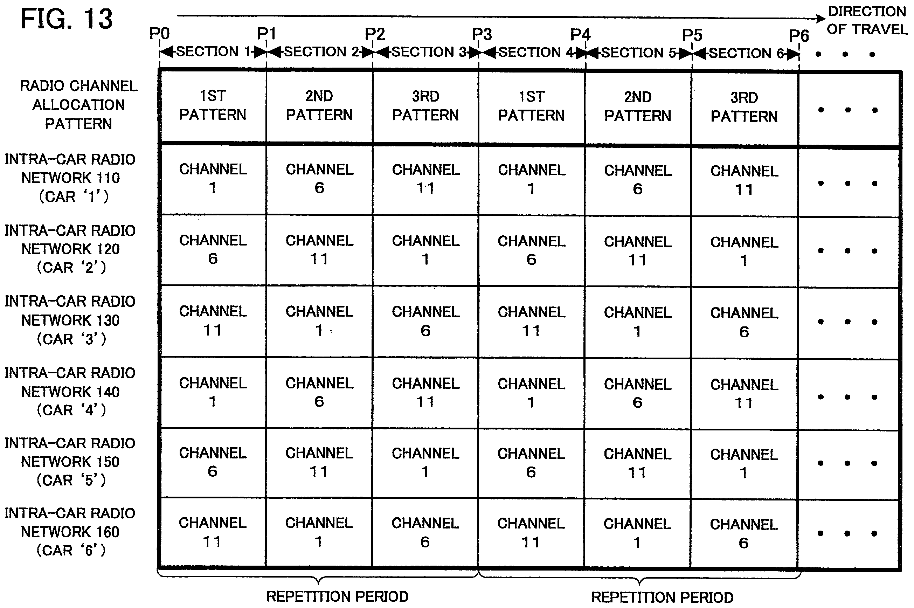

FIG. 12 is a diagram showing an example of points and sections, through which the train 100 containing the communication system according to the first embodiment passes. FIG. 13 is a diagram showing an example in which the radio channels of the intra-car radio networks 110, 120, 130, 140, 150 and 160 in the communication system according to the first embodiment are changed at predetermined points. As a method of generating changeover timing at which the radio channel allocation pattern is changed over, the timing can be generated on the basis of a place where the train 100 is traveling. The radio channel changeover timing determination unit 305 or the control unit 602 includes a current position acquisition unit (for example, the position information acquisition unit 621 in FIG. 5) for acquiring current position information of the train 100. Methods of acquiring the current position information include a method of acquiring position information with use of a GPS (Global Positioning System) as a mounted device, a method of acquiring position information from a train control system which is generally mounted in the train, and other methods, and are not specifically limited to a specific one.

Furthermore, the radio channel changeover timing determination unit 305 holds predetermined radio channel changeover reference place information (an example of a predetermined condition) which indicates predetermined places at which the radio channel is changed over. If it compares the current position information acquired by the current position acquisition unit with the radio channel changeover reference place information and recognizes that the current position is a place where the radio channel should be changed over, it informs the radio channel allocation pattern decision unit 306 of a changeover request of the radio channel allocation pattern.

FIG. 12 and FIG. 13 show an example wherein, when the train 100 arrives at the predetermined radio channel changeover reference positions, the radio channels allocated to the respective intra-car radio networks 110, 120, 130, 140, 150 and 160 of car '1' 101, car '2' 102, car '3' 103, car '4' 104, car '5' 105 and car '6' 106 are changed over. FIG. 12 shows points P0 to P6 and respective sections 1 to 6, through which the train 100 passes. FIG. 13 is a diagram showing a relationship between the radio channel allocation patterns to be selected in the respective sections and the radio channels to be allocated to the intra-car radio networks 110, 120, 130, 140, 150 and 160. In the section 1 from the point P0 as a starting point to the point P1, the first pattern is set as the radio channel allocation pattern. Thereafter, in the section 2 from the point P1 as an arrival point to the point P2, the second pattern is set as the radio channel allocation pattern. Thereafter, in the next section 3 from the point P2 as an arrival point to the point P3, the third pattern is set as the radio channel allocation pattern. Thereafter, in the next section 4 from the point P3 as an arrival point to the point P4, the first pattern is again set as the radio channel allocation pattern.

In this way, the radio channels allocated to the intra-car radio networks 110, 120, 130, 140, 150 and 160 are changed over by the position of the train 100 containing its own terminals. Therefore, even when the communication state of each radio channel is changed over according to the position, the dependency of the communication state upon a specific radio channel allocated to each of the intra-car radio networks 110, 120, 130, 140, 150 and 160 can be lightened and thus differences in the communication performance between the respective intra-car radio networks 110, 120, 130, 140, 150 and 160 can be made small. In this connection, the present invention may also be arranged so that, in place of the method of changing over the radio channel allocation patterns at each of the predetermined points, the changeover of the radio channel allocation patterns is carried out for each of predetermined traveling distances.

Explanation will next be made in connection with a case which uses a method of generating timing on the basis of the communication speeds acquired by the intra-car radio networks 110, 120, 130, 140, 150 and 160, as a method of generating changeover timing of the radio channel allocation patterns. The gateway terminal 111 acquires the communication speed information or the communication performance information (these are also collectively referred to as "communication state") at the communication speed information acquisition unit 624 or the communication performance information acquisition unit 623 shown in FIG. 5. The radio channel changeover timing determination unit 305 acquires the communication states of the intra-car radio networks 110, 120, 130, 140, 150 and 160 from the communication speed information acquisition unit 624 and measured, for example, an average value of the communication speeds of the intra-car radio networks 110, 120, 130, 140, 150 and 160 during a predetermined period. The communication speed measuring method is not specifically limited. For example, when the content data supplied from the distribution data supply unit 303 is distributed, the communication speeds may be calculated by measuring a quantity of the data distributed during a predetermined period. When the predetermined period is 60 seconds and a quantity of the data distributed during the period is 60 MB (megabytes), an average value of the communication speeds during the period can be calculated to be 8 Mbps (mega bit per second).

The radio channel changeover timing determination unit 305 has a reference value of the predetermined communication speeds for the purpose of requesting a changeover of the radio channel. When comparing an average value of actual communication speeds of the intra-car radio networks 110, 120, 130, 140, 150 and 160 in a predetermined period with the reference value of the communication speed and determining that the average value is lower than reference value, a changeover request of the radio channel allocation pattern is informed to the radio channel allocation pattern decision unit 306. For example, in the case where the predetermined period is 60 seconds and the reference value of the communication speed is 3 Mbps, when the communication speed measured in a certain period of 60 seconds are smaller than 3 Mbps, the changeover request of the radio channel allocation pattern is informed to the radio channel allocation pattern decision unit 306. When comparing the average value of the communication speeds with the reference value of the communication speed and determining that the number of times when the former is smaller than the reference value is larger than the predetermined number of times, the changeover request of the radio channel allocation pattern may be informed to the radio channel allocation pattern decision unit 306.

The communication speeds measured in the intra-car radio networks 110, 120, 130, 140, 150 and 160 are measured values indicating actual data distribution states which are influenced by the interference with radio waves emitted from the carry-on radio devices or by their congestion, and therefore can well reflect the actual communication states of the intra-car radio networks 110, 120, 130, 140, 150 and 160. For this reason, only when the changeover of the radio channel allocation pattern is required, the changeover of the radio channel allocation pattern can be requested. Further, even when the communication state of a specific radio channel has extremely deteriorated and the communication speed becomes extremely low, the changeover request of radio channel allocation pattern can be quickly informed to the radio channel allocation pattern decision unit 306.

Explanation will next be made as to a case where a method of generating changeover timing of the radio channel allocation pattern on the basis of the transmission delay time in the data communication of the intra-car radio networks 110, 120, 130, 140, 150 and 160 is employed as a method of generating the timing. In the gateway terminal 111, the transmission delay time information acquisition unit 625 shown in FIG. 5 acquires the transmission delay time information in the respective intra-car radio networks. The radio channel changeover timing determination unit 305 of the gateway terminal 111 acquires the communication states of the intra-car radio networks 110, 120, 130, 140, 150 and 160 from the transmission delay time information acquisition unit 625, and measures the number of times when the transmission delay time of the data communication in the intra-car radio networks 110, 120, 130, 140, 150 and 160 exceeds a predetermined reference value of the transmission delay time in the predetermined period. When the number of times when the transmission delay time exceeds the reference value is larger than a predetermined reference number of times, a changeover request of the radio channel allocation pattern is transmitted to the radio channel allocation pattern decision unit 306.

The delay time measuring method is not specifically limited. For example, when the content data supplied from the distribution data supply unit 303 is distributed, the delay time may be calculated by measuring a period of time from a time point when a transmission packet is transmitted from the second communication unit 302 to a time point when a response packet to the transmission packet is received by the second communication unit 302. When the predetermined period is 60 seconds, the predetermined reference value of the delay time is 50 ms (milliseconds) and the predetermined reference number of times is ten; the number of times when the delay time exceeds 50 ms in the period of 60 seconds exceeds ten, the changeover request of the radio channel allocation pattern is transmitted to the radio channel allocation pattern decision unit 306.

The communication delay times measured in the intra-car radio networks 110, 120, 130, 140, 150 and 160 are measured values indicating actual data distribution states which are influenced by the interference with radio waves emitted from the carry-on radio devices or by their congestion, and therefore can well reflect the actual communication states of the intra-car radio networks 110, 120, 130, 140, 150 and 160. For this reason, only when the changeover of the radio channel allocation pattern is required, the radio channel allocation pattern changeover can be required. Further, even when the communication state of a specific radio channel has extremely deteriorated and the communication delay time becomes extremely long, the changeover request of the radio channel allocation pattern can be quickly informed to the radio channel allocation pattern decision unit 306.

Next, operation of the radio channel allocation pattern decision unit 306 when a changeover of the radio channel allocation pattern is required will be explained. The radio channel allocation pattern decision unit 306 stores allocation patterns being currently allocated. The order of use of the allocation patterns is previously determined. In the example of FIG. 10, it is set so that the first pattern is followed by the second pattern, the second pattern is followed by the third pattern, and the third pattern is followed by the first pattern. The radio channel allocation pattern decision unit 306, when receiving the radio channel allocation changeover request from the radio channel changeover timing determination unit 305, selects an allocation pattern next to the allocation pattern being currently allocated. For example, when the current pattern is the first pattern and channel '1' (1ch) is allocated to the intra-car radio network 110 of car '1' 101, the second pattern is selected as the next allocation pattern. In the second pattern, channel 6 (6ch) as a radio channel to be allocated to the intra-car radio network 110 of car '1' 101 is informed to the first communication unit 301. The first communication unit 301 informs the respective radio display terminals of the intra-car radio network 110 of the fact that the radio channel used in the intra-car radio network 110 is changed over from channel 1 (1ch) to channel 6 (6ch), and thereafter the radio channel is changed over to channel 6 (6ch) allocated in the second pattern.

Similarly, the radio channel allocation pattern decision unit 306, when receiving the radio channel allocation changeover request from the radio channel changeover timing determination unit 305, informs the radio channel allocation changeover notification control unit 307 of the fact that the second pattern is selected as the next allocation pattern. The radio channel allocation changeover notification control unit 307 informs the gateway terminals of the other cars via the inter-car network 107 of the fact that the second pattern is the next allocation pattern.

When the radio channels are changed over in the intra-car radio networks 110, 120, 130, 140, 150 and 160, the intra-car radio networks 110, 120, 130, 140, 150 and 160 formed with the radio channels being currently used are released, and the intra-car radio networks 110, 120, 130, 140, 150 and 160 are formed with the next radio channels. For this reason, for just a short time, there is a duration that the intra-car radio networks 110, 120, 130, 140, 150 and 160 cannot communicate. In the radio display terminal, distribution of data not requiring the transmission delay performance as content data once stored and then reproduced presents no problem. In the distribution of data requiring a short transmission delay performance such as a control command for controlling the reproduction of contents, however, an uncommunicatable duration undesirably takes place.

A possibility of generation of data communication requiring a short communication delay time may be, in some cases, locally present depending on the position of its own terminal or time. For example, when the train 100 arrives at a station, a control command for reproducing station information may be, in some cases, transmitted to a radio display terminal. In this case, when the transmission delay time of the control command is long, there is a problem that the station information cannot be reproduced at the station arrival timing. Alternatively, a control command for reproducing information at every hour time (such as "1 hour, 0 minutes, 0 seconds" having no fractions) may be, in some cases, transmitted to a radio display terminal. In this case, when the control command has a long transmission delay time, there is a problem that the information can be reproduced only at timing delayed from every hour time.

For this reason, even when the current position information coincides with predetermined radio channel changeover reference place information (that is, when a predetermined condition of position information is satisfied), if a position indicated by the position information acquired by the position information acquisition unit 621 is present within a predetermined position range, then the position indicated by the position information is compared with the radio channel changeover reference place information. If the current position is recognized as a radio channel changeover position, a changeover request of the radio channel allocation pattern is informed to the radio channel allocation pattern decision unit 306. It is desirable that, until the position information becomes outside the predetermined position range, execution of a process (second process) of changing over the selected radio channel allocation pattern of the plurality of radio channel allocation patterns to a different one of the radio channel allocation patterns be postponed. Alternatively, it is desirable that, even when the current position information coincides with the predetermined radio channel changeover reference place information (that is, even when the predetermined position information conditions are satisfied), if a time indicated by time information acquired by the time information acquisition unit 622 is within a predetermined time range, execution of the second process be postponed until when the time indicated by the time information becomes outside the predetermined time range. To be more specific, the radio channel changeover postponement notification unit 309 holds information about a position of its own terminal or a time, in which there is a high possibility that a short communication delay time is required for the data communication. When the position of its own terminal corresponds to a position, in which there is a high possibility that a short communication delay time is required for the data communication (that is, when the terminal position is within a predetermined position range), or when the current time corresponds to a time, in which there is a high possibility that a short communication delay time is required for the data communication (that is, when the current time is within a predetermined time range); it is desirable that the radio channel changeover postponement notification unit 309 require the radio channel allocation changeover notification control unit 307 to postpone the radio channel changeover. The radio channel allocation changeover notification control unit 307 may be configured so as to postpone the notification of the radio channel changeover request and the notification of the next allocation patterns to the gateway terminals of the other cars during a period when postponement of the radio channels is being required by the radio channel changeover postponement notification unit 309.

In this way, generation of the data communication requiring a short communication delay time is prevented during an interrupted period of communication due to the radio channel changeover, thus suppressing deterioration of the communication performance.

Explanation will then be made as to operation of a case where a radio channel allocation pattern changeover request transmitted from another gateway terminal is received at the another gateway terminal via the inter-car network 107. As an example, explanation will be made as to operation when the request is received by the gateway terminal 121 of car '2' 102. When the second communication unit 302 of the gateway terminal 121 of the intra-car radio network 120 receives the radio channel allocation pattern changeover request, the radio channel changeover notification reception control unit 308 analyzes the contents of the request and informs the radio channel allocation pattern decision unit 306 of the radio channel allocation pattern corresponding to the changeover request. The radio channel allocation pattern decision unit 306, when the informed radio channel allocation pattern is the second pattern, determines that the radio channel set for car '2' 102 is channel 11 (11ch) as shown in FIG. 10 and this is informed to the first communication unit 301. The first communication unit 301 informs the respective radio display terminals of the intra-car radio network 120 of the fact that the radio channel used in the intra-car radio network 120 is changed over from channel 6 (6ch) to channel 11 (11ch), and thereafter the radio channel is changed over to channel 11 (11ch) allocated in the second pattern.

Through the aforementioned operation, the radio channels allocated to the intra-car radio networks 110, 120, 130, 140, 150 and 160 are changed over periodically, (e.g., 1ch → 6ch → 11ch → ...), and therefore an adverse effect of the communication state of a specific channel is lightened. According to the first embodiment, since the radio channels are allocated so as to reduce variations in communication performance between the plurality of intra-car radio networks forming the communication system, the whole communication system can achieve excellent communication performance.

### Modified Example of First Embodiment

FIG. 14 is a diagram schematically showing a configuration of a modified example of the communication system according to the first embodiment. In FIG. 14, constituent elements that are the same as or correspond to those shown in FIG. 1 are assigned the same reference symbols as those shown in FIG. 1. The communication system shown in FIG. 14 is different from the communication system shown in FIG. 1 in respects that a server 650 having a function as a radio channel allocation device is provided in car '1' 101 and that a gateway terminal 111a does not have the function as the radio channel allocation device and has substantially the same configuration as those of the gateway terminals 121, 131, 141, 151 and 161.

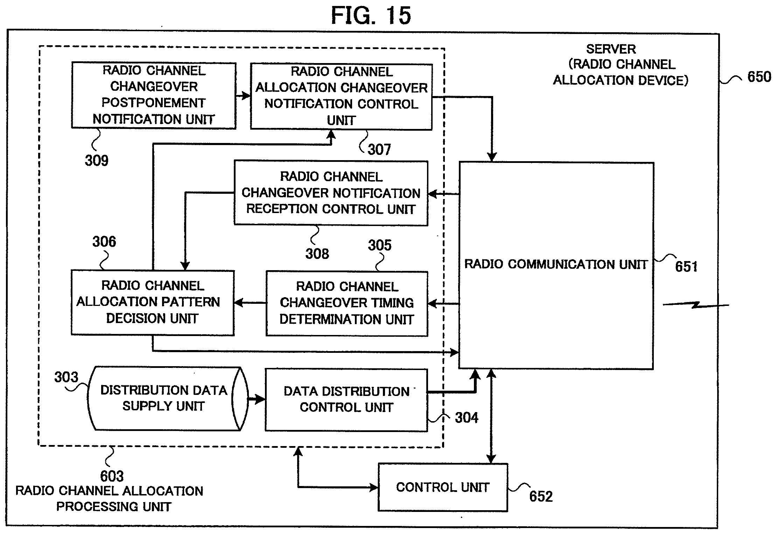

FIG. 15 is a block diagram schematically showing a configuration of the server (radio channel allocation device) 650 shown in FIG. 14. In FIG. 15, constituent elements that are the same as or correspond to those shown in FIG. 4 are assigned the same reference symbols as those shown in FIG. 4. The server 650 shown in FIG. 15 is different from the gateway terminal that is a radio channel allocation device shown in FIG. 4, in a respect that a radio communication unit 651 for communicating with the gateway terminal 111a is provided and in a respect of operation of a control unit 652. In this connection, the control unit 652 may have substantially the same configuration as the control unit shown in FIG. 5.

This modified example can also achieve advantageous effects similar to the device and the method that have been described in FIG. 1 to FIG. 13. Furthermore, the server 650 may be a device connected by cable to the inter-car network 107.

### Second Embodiment

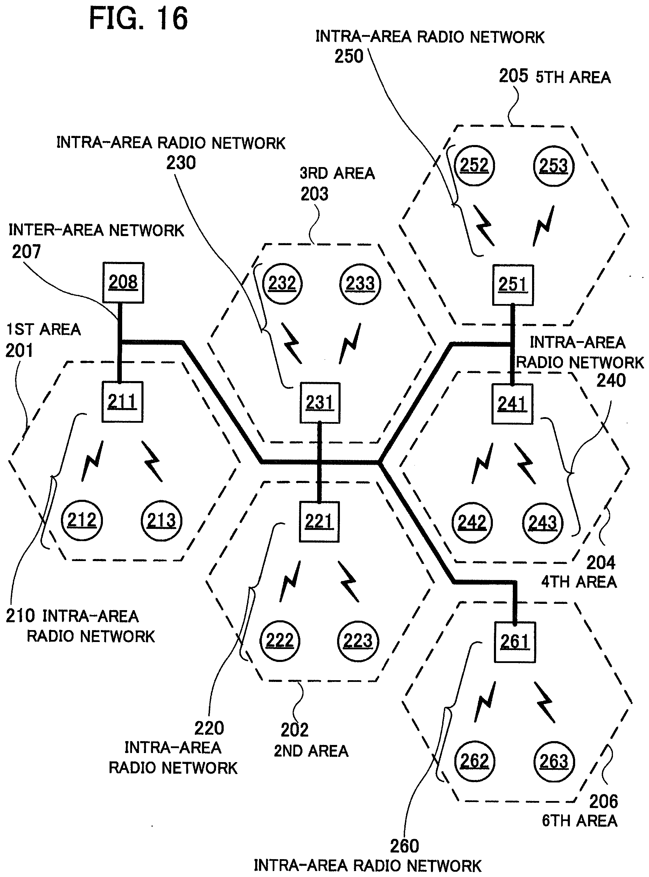

FIG. 16 is a diagram schematically showing a configuration of a communication system according to a second embodiment of the present invention. As shown in FIG. 16, the communication system according to the second embodiment is a monitor camera communication system, in which a plurality of monitor camera devices (radio monitor camera terminals) installed in a plurality of areas 201, 202, 203, 204, 205 and 206 are connected via communication networks so that a monitor server 208 manages monitor video data. Further, the communication system according to the second embodiment is a system which can execute the radio channel allocation method to which the present invention is applied.

The communication performance of the whole communication system according to the second embodiment is improved by performing radio channel allocation so as to lessen variations in communication performance (that is, differences in communication performance) between respective ones of a plurality of intra-cell radio networks forming the communication system. In the second embodiment, "cells" denote the first area 201, the second area 202, the third area 203, the fourth area 204, the fifth area 205 and the sixth area 206. Accordingly, one cell corresponds to one area. In the second embodiment, one area has a regular hexagon shape, and the plurality of areas form a group of areas similar to a pattern (honeycomb pattern) having the regular-hexagon-shaped areas closely arranged horizontally and vertically. An intra-area radio network as an intra-cell radio network is formed in each of the areas as the intra-cell radio network. The communication system according to the second embodiment includes intra-area radio networks 210, 220, 230, 240, 250 and 260. The intra-area radio networks 210, 220, 230, 240, 250 and 260 formed in the respective areas are interconnected by an inter-cell network so as to be communicatable therewith. In the second embodiment, the inter-cell network is, for example, an inter-area network 207 connected through wire to the intra-area radio networks 210, 220, 230, 240, 250 and 260. Communication between the intra-area radio networks 210, 220, 230, 240, 250 and 260 and the inter-area network 207 may also be achieved in a wireless manner. Further, the inter-area network 207 may be connected to the monitor server 208 in a wired or wireless manner. Although the first to sixth areas 201 to 206 are exemplified to have a regular hexagon shape in FIG. 16, the shape of each area may have a circular or another polygonal shape. When the first to sixth areas 201 to 206 have a regular hexagon shape, however, different radio channels may be allocated using three radio channels in mutually adjacent ones of the areas. Further, the first to sixth areas 201 to 206 may be a plurality of rooms or buildings physically partitioned. However, it is not necessarily required that they are physically partitioned. They are a plurality of monitor target areas partitioned for convenience sake for the purpose of monitoring a single wide area range.

The intra-area radio network 210 in the first area 201 includes radio monitor camera terminals 212 and 213 having a monitor camera function as radio terminals. The intra-area radio network 220 in the second area 202 includes radio monitor camera terminals 222 and 223 having the monitor camera function as radio terminals. The intra-area radio network 230 in the third area 203 includes radio monitor camera terminals 232 and 233 having the monitor camera function as radio terminals. The intra-area radio network 240 in the fourth area 204 includes radio monitor camera terminals 242 and 243 having the monitor camera function as radio terminals. The intra-area radio network 250 in the fifth area 205 includes radio monitor camera terminals 252 and 253 having the monitor camera function as radio terminals. The intra-area radio network 260 in the sixth area 206 includes radio monitor camera terminals 262 and 263 having the monitor camera function as radio terminals. However, the number of the radio monitor camera terminals included in each of the intra-area radio networks 210, 220, 230, 240, 250 and 260 is not limited to two, but any number may be employed. The numbers of the radio monitor camera terminals included in the respective intra-area radio networks 210, 220, 230, 240, 250 and 260 are not necessarily limited to the same, and may be different from each other.

The radio communication scheme employed in the intra-area radio networks 210, 220, 230, 240, 250 and 260 is not limited to a specific radio communication scheme. The intra-area radio networks 210, 220, 230, 240, 250 and 260 in the second embodiment is, for example, wireless LANs based of IEEE 802.11g. As channels communicatable with each other with no mutual interference, channels spaced by every five channels such as channel 1 (1ch), channel 6 (6ch) and channel 11 (11ch), can be set. However, the communication scheme to be used and the number of channels to be used are not limited to the above examples.

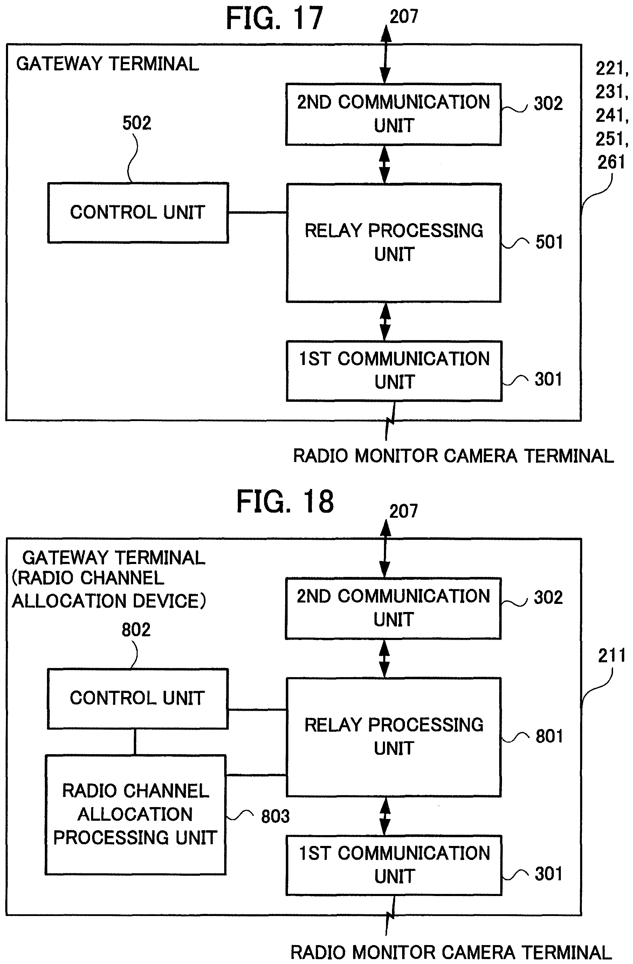

FIG. 17 is a block diagram schematically showing a configuration of any of gateway terminals 221, 231, 241, 251 and 261 shown in FIG. 16. As shown in FIG. 17, each of the gateway terminals 221, 231, 241, 251 and 261 includes a first communication unit 301 for performing radio communication with the radio monitor camera terminals 222 and 223, radio monitor camera terminals 232 and 233, radio monitor camera terminals 242 and 243, radio monitor camera terminals 252 and 253, and radio monitor camera terminals 262 and 263; a second communication unit 302 for communicating through wire with the inter-area network 207; a relay processing unit 501 for performing relaying operation to make it possible to communicate between the first communication unit 301 and the second communication unit 302; and a control unit 502 for controlling operation of the respective units. Each of the gateway terminals 221, 231, 241, 251 and 261 receives an instruction signal of the radio channel allocation from a gateway terminal 211 as the radio network allocation device. Each first communication unit 301 of the gateway terminals 221, 231, 241, 251 and 261 changes over the radio channels of the intra-area radio networks 220, 230, 240, 250 and 260 to be used for communication with the radio monitor camera terminals according to the received instruction signal.

FIG. 18 is a block diagram schematically showing a configuration of the gateway terminal 211 (the radio channel allocation device in FIG. 16) shown in FIG. 16. As shown in FIG. 18, the gateway terminal 211 includes a first communication unit 301 for performing radio communication with the radio monitor camera terminals 212 and 213; a second communication unit 302 for communicating through wire with the inter-cell network 207; a relay processing unit 801 for relaying the first communication unit 301 and the second communication unit 302 to communicate therewith; a control unit 802 for controlling operation of the respective units; and a radio channel allocation processing unit 803 for allocating radio channels. In the gateway terminal 211, the radio channel allocation processing unit 803 generates an instruction signal of the radio channel allocation according to an instruction from the control unit 802 and transmits the instruction signal to the respective gateway terminals 221, 231, 241, 251 and 261. In the gateway terminal 211 and the gateway terminals 221, 231, 241, 251 and 261 when receiving the instruction signal, the first communication unit 301 for performing radio communication changes the radio channel to be used for communication with the radio monitor camera terminals.

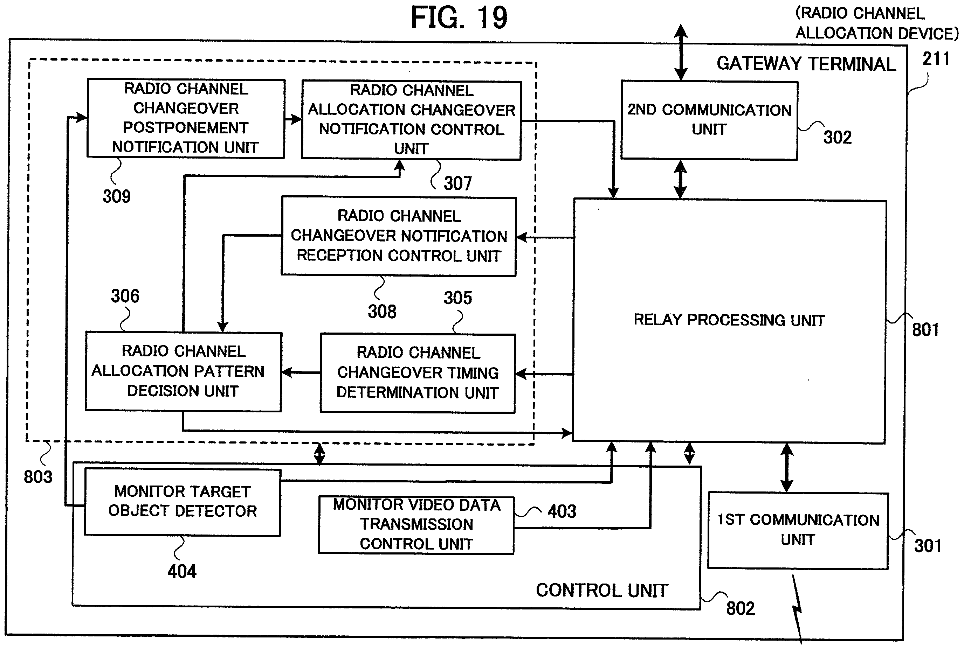

FIG. 19 is a block diagram showing in detail a configuration of the gateway terminal 211 that is the radio channel allocation device shown in FIG. 16 and FIG. 18. In other words, FIG. 19 shows the configuration of the gateway terminal having the radio channel allocating function and associated with the radio channel allocation (that is, an example in which part of the gateway terminal forms the radio channel allocation device). As shown in FIG. 19, the gateway terminal having the radio channel allocating function corresponds to at least one of the gateway terminals 211, 221, 231, 241, 251 and 261, and corresponds to the gateway terminal 211 in the second embodiment. In FIG. 19, a first communication unit 301, a second communication unit 302, a relay processing unit 801, a radio channel changeover timing determination unit 305, a radio channel allocation pattern decision unit 306, a radio channel allocation changeover notification control unit 307, a radio channel changeover notification reception control unit 308, and a radio channel changeover postponement notification unit 309 have functions similar to the functions already explained in the first embodiment (FIG. 4). The gateway terminal 211 having the radio channel allocating function includes a monitor video data transmission control unit 403 for transmitting monitor video data transmitted from the radio monitor camera terminal and received at the first communication unit 301 to the second communication unit 302, and then for transmitting the data from the second communication unit 302 via the inter-area network 207 to the monitor server 208, and a monitor target object detector 404 for analyzing an image of the monitor video data transmitted from the radio monitor camera terminal and for extracting an object as a monitor target from the monitor video data. In FIG. 19, although the monitor video data transmission control unit 403 and the monitor target object detector 404 are illustrated as part of the control unit 802, the monitor video data transmission control unit 403 and the monitor target object detector 404 may be arranged as separated units different from the control unit 802 for controlling operation of the whole device.

When the monitor target object detector 404 successfully extracts an object (image object) as a monitor target from the monitor video data, it is necessary to continue monitoring operation of the radio monitor camera terminal which generated the monitor video data including the extracted monitor target object. For this reason, it is necessary to prevent interruption of shooting of the radio monitor camera terminal and interruption of transmission of the monitor video data from the radio monitor camera terminal to the gateway terminals 211, 221, 231, 241, 251 and 261. When the radio channels of the intra-area radio networks 210, 220, 230, 240, 250 and 260 are changed over, reconfiguration of the communication networks is required. This causes temporary interruption of radio communication of the intra-area radio networks 210, 220, 230, 240, 250 and 260. To avoid this, when an monitor target object is extracted from the monitor video data, an instruction signal is transmitted to the radio channel changeover postponement notification unit 309 and a radio channel changeover delay request is transmitted from the radio channel changeover postponement notification unit 309 to the radio channel allocation changeover notification control unit 307, so that even when a radio channel changeover request is issued (that is, even when the current information coincides with the predetermined radio channel changeover reference place information), the radio channel is delayed by a predetermined time duration. In this connection, the delay duration is not limited to a predetermined delay duration, but may be a duration until no monitor target object is extracted. Further, as the delay duration, a different value (time length) based on one or a combination of conditions of the type of the monitor target object, an area of detection of the monitor target object, a time when the monitor target object is detected, and so on may be employed.

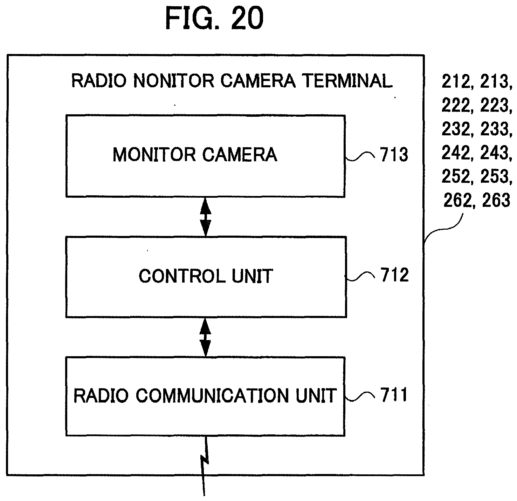

FIG. 20 is a block diagram schematically showing a configuration of any of radio monitor camera terminals 212, 213, 222, 223, 232, 233, 242, 243, 252, 253, 262, and 263 shown in FIG. 16. The radio monitor camera terminal includes a radio communication unit 711 for performing radio communication with the gateway terminals 211, 221, 231, 241, 251 and 261; a monitor camera 713; and a control unit 712 for transmitting the monitor video data generated by shooting with use of the monitor camera 713 via the radio communication unit 711.

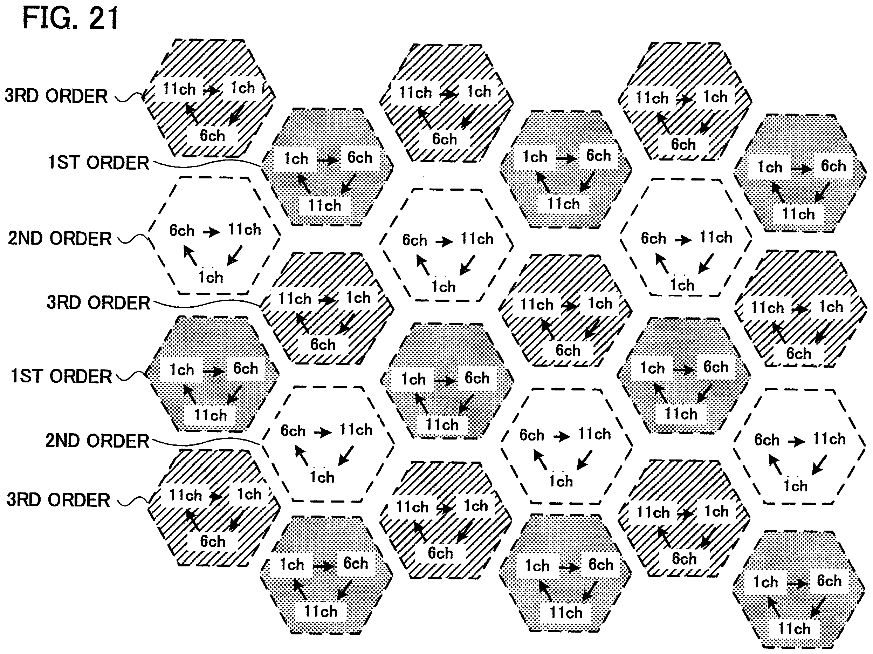

FIG. 21 is a schematic plan view schematically showing a plurality of areas in which the communication system according to the second embodiment is provided. In FIG. 21, the plurality of areas is illustrated in the form of areas of a regular hexagon shape arranged in rows and columns. In the FIG. 21, the plurality of areas includes shaded areas of a regular hexagon shape for circular changeover of radio channels in a first order (1ch → 6ch → 11ch), white color areas of a regular hexagon shape for circular changeover of radio channels in a second order (6ch → 11ch → 1ch), and hatched areas of a regular hexagon shape for circular changeover of radio channels in a third order (11ch → 1ch → 6ch). As can be understood from FIG. 21, in the monitor camera communication system according to the second embodiment, mutually different radio channels are set as radio channels to be used to avoid mutual interference of radio waves used in the radio communication of the intra-area radio networks (areas of a regular hexagon shape) formed in adjacent ones of the areas. In other words, radio channels are allocated in the adjacent areas, for example, so that any one of three radio channels of channel 1 (1ch), channel 6 (6ch) and channel 11 (11ch) is used and so that mutually different radio channels are allocated in the intra-area radio networks of adjacent areas. As also can be understood from FIG. 21, the area setting method in the second embodiment is suitable for a monitor system used for a wide monitor target range.

In the second embodiment, the gateway terminal (for example, the gateway terminal 211) having the radio channel allocating function performs the following operation to allocate radio channels to the plurality of intra-area radio networks 210, 220, 230, 240, 250 and 260. Firstly, a pattern determining process (first process) of determining a plurality of radio channel allocation patterns in which radio channels can be allocated to the plurality of intra-area radio networks 210, 220, 230, 240, 250 and 260 is executed so that mutually different radio channels are allocated to mutually adjacently located intra-area radio networks of the plurality of intra-area radio networks 210, 220, 230, 240, 250 and 260 are allocated. Secondly, a radio channel allocation pattern selecting and instructing process (second process) of selecting one of the plurality of radio channel allocation patterns (for example, the first, second and third patterns), and of supplying a radio channel allocation changeover instruction signal based on the selected radio channel allocation pattern to any or all of a plurality of gateway terminals 211, 221, 231, 241, 251 and 261, is executed. The pattern selecting and instructing process (second process) is repetitively executed while the radio channel allocation pattern selected from among the plurality of radio channel allocation patterns is changed to a different radio channel allocation pattern one after another. In this connection, information indicating adjacent ones of the areas is previously stored in the server or the like provided within any of the gateway terminals or within the communication system.

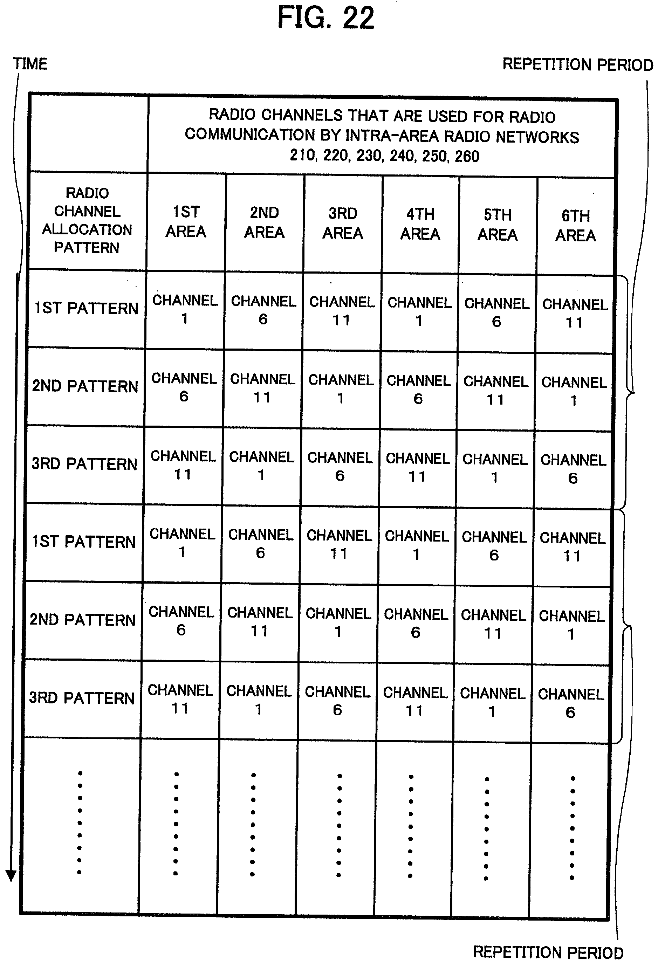

FIG. 22 is a diagram showing, in the form of a table, radio channel allocation patterns of the intra-area radio networks 210, 220, 230, 240, 250 and 260 in the communication system according to the second embodiment. For example, channel 1 (1ch) is allocated to the intra-area radio network 210 formed in the first area 201, channel 6 (6ch) is allocated to the intra-area radio network 220 formed in the second area 202, channel 11 (11ch) is allocated to the intra-area radio network 230 formed in the third area 203, channel 1 (1ch) is allocated to the intra-area radio network 240 formed in the fourth area 204, channel 6 (6ch) is allocated to the intra-area radio network 250 formed in the fifth area 205, and channel 11 (11ch) is allocated to the intra-area radio network 260 formed in the sixth area 206.

The same radio channel 1 (1ch) is allocated to the intra-area radio network 210 and to the intra-area radio network 240. However, since the first area 201 is located not adjacent to the fourth area 204 and is spaced therefrom by a certain distance, a radio wave transmitted in the intra-area radio network 210 is sufficiently attenuated at the position of the fourth area 204. For this reason, the radio communication in the intra-area radio network 210 and the radio communication in the intra-area radio network 240 less cause interference or congestion therebetween, and therefore each of them makes it possible to achieve excellent radio communication.

Meanwhile, the intra-area radio networks 210, 220, 230, 240, 250 and 260 may, in some cases, cause interference or congestion with a radio wave transmitted from a radio communication device not included in the monitor camera communication system. For example, when the radio communication device not included in the monitor camera communication system in the first area 201 uses channel 1 (1ch), the intra-area radio network 210 formed in the same first area 201 causes interference. Similarly, when a radio communication device not included in the monitor camera communication system in the second area 202 uses channel 6 (6ch), the intra-area radio network 220 formed in the same second area 202 causes interference.

In the respective intra-area radio networks 210, 220, 230, 240, 250 and 260 of the monitor camera communication system, monitor video data shot by the radio monitor camera terminal are transmitted to the gateway terminal within the same area and transmitted from the gateway terminal to the monitor server 208 so that the monitor video data are collected at the monitor server 208. In the respective intra-area radio networks 210, 220, 230, 240, 250 and 260, occurrence of interference or congestion causes reduction of the communication speeds obtained by the intra-area radio networks 210, 220, 230, 240, 250 and 260. When such communication speeds are reduced, there may be a situation where the radio monitor camera terminal must be used by degrading the quality of monitor video data to decrease a data rate. When a radio communication device as an interference or congestion generation source is not largely moved and the state of interference or congestion in each area is not largely changed, there is a problem that the quality of monitor video data is excellent in an area but the quality of monitor video data deteriorates in another area.

The problem is caused by biased interference or congestion in the radio communication between the radio channels. For this reason, the radio channels to be used in the intra-area radio networks 210, 220, 230, 240, 250 and 260 are changed over to decrease biases in the interference or congestion in the radio channels and to lighten the bias influences. The radio channels used in the intra-area radio networks 210, 220, 230, 240, 250 and 260 may be changed over when periodically at intervals of a predetermined time or when a predetermined condition is satisfied. Alternatively, the radio channels used in the intra-area radio networks 210, 220, 230, 240, 250 and 260 may be changed over when a predetermined condition is satisfied. The allocation patterns of the radio channels are the same as those explained in the first embodiment. Further, the method of changing over the radio channels at intervals of a predetermined time is the same as that explained in the first embodiment.

Through the aforementioned operation, the radio channels allocated to the intra-area radio networks 210, 220, 230, 240, 250 and 260 or the like are changed over to channels 1 (1ch), 6 (6ch) and 11 (11ch), whereby the influence of the communication state of a specific radio channel is lightened. According to the second embodiment, since such radio channel allocation is carried out so as to reduce variations in communication performance between the plurality of intra-area radio networks forming the communication system, the whole communication system can achieve excellent communication performance. During extraction of a monitor target object, allocation changeover of the radio channels is prevented, thereby suppressing deterioration of the communication performance.

In the second embodiment, points except for the above description are the same as those according to the first embodiment.

### EXPLANATION OF REFERENCE CHARACTERS

100 train; 101 car '1' (car); 102 car '2' (car); 103 car '3' (car); 104 car '4' (car); 105 car '5' (car); 106 car '6' (car); 107 inter-car network (inter-cell network); 110, 120, 130, 140, 150, 160 intra-car network (intra-cell network); 111 gateway terminal (radio channel allocation device); 111a, 121, 131, 141, 151, 161 gateway terminal; 112, 113, 114, 122, 123, 124, 132, 133, 134, 142, 143, 144, 152, 153, 154, 162, 163, 164 radio display terminal (radio terminal); 201 first area; 202 second area; 203 third area; 204 fourth area; 205 fifth area; 206 sixth area; 207 inter-area network (inter-cell network); 208 monitor server; 210, 220, 230, 240, 250, 260 intra-area radio network (intra-cell radio network); 211 gateway terminal (radio channel allocation device); 221, 231, 241, 251, 261 gateway terminal; 212, 213, 222, 223, 232, 233, 242, 243, 252, 253, 262, 263 radio monitor camera terminal (radio terminal); 621 position information acquisition unit; 622 time information acquisition unit; 623 communication performance information acquisition unit; 624 communication speed information acquisition unit; 625 transmission delay time information acquisition unit; 650 server (radio channel allocation device).

## Claims

1. A radio channel allocation method of allocating radio channels to each of a plurality of intra-cell radio networks (110 to 160) in a communication system that includes the plurality of intra-cell radio networks (110 to 160) including a radio terminal, an inter-cell network (107), and a plurality of gateway terminals (111 to 161) for relaying communication between the plurality of intra-cell radio networks (110 to 160) and the inter-cell network (107), the plurality of gateway terminals (111 to 161) setting each radio channel to be used in the plurality of intra-cell radio networks (110 to 160), the radio channel allocation method comprising the steps of:
executing, by a radio channel allocation device (111), a first process of determining a plurality of radio channel allocation patterns for allocating radio channels to the plurality of intra-cell radio networks (110 to 160) so that mutually different radio channels are set between adjacently located intra-cell radio networks of the plurality of intra-cell radio networks (110 to 160);
repeating, by the radio channel allocation device (111), a second process of selecting a radio channel allocation pattern from among the plurality of radio channel allocation patterns and supplying a radio channel allocation changeover instruction signal based on the selected radio channel allocation pattern to the plurality of gateway terminals (111 to 161), so that the selected radio channel allocation pattern in the plurality of radio channel allocation patterns is changed to a different radio channel allocation pattern one after another; the radio channel allocation method being **characterised by** acquiring position information by a position information acquisition unit (621) of the radio channel allocation device (111),
wherein when the position information satisfies a predetermined condition, the second process is executed.

2. The radio channel allocation method according to claim 1, wherein when a position indicated by the position information is within a predetermined position range, execution of the second process is postponed until the position indicated by the position information becomes outside the predetermined position range.

3. The radio channel allocation method according to claim 1, further comprising a step of acquiring time information,
wherein when a time indicated by the time information is within a predetermined time range, execution of the second process is postponed until the time indicated by the time information becomes outside the predetermined time range.

4. The radio channel allocation method according to claim 1, wherein when image analysis on video data transmitted from the radio terminal in the plurality of intra-cell radio networks is conducted and a predetermined image object is detected as a result of the image analysis, execution of the second process is postponed.

5. A radio channel allocation device (111) for allocating radio channels to each of a plurality of intra-cell radio networks (110 to 160) in a communication system that includes the plurality of intra-cell radio networks (110 to 160) including a radio terminal, an inter-cell network (107), and a plurality of gateway terminals (111 to 161) for relaying communication between the plurality of intra-cell radio networks (110 to 160) and the inter-cell network (107) and for (111 to 161) setting each radio channel to be used in the plurality of intra-cell radio networks, the radio channel allocation device (111) comprising:
a radio channel allocation pattern decision unit (306) for executing a first process of determining a plurality of radio channel allocation patterns for allocating radio channels to the plurality of intra-cell radio networks so that mutually different radio channels are set between adjacently located intra-cell radio networks (110 to 160) of the plurality of intra-cell radio networks (110 to 160);
a radio channel allocation changeover notification control unit (307) for repeating a second process of selecting a radio channel allocation pattern from among the plurality of radio channel allocation patterns and supplying a radio channel allocation changeover instruction signal based on the selected radio channel allocation pattern to the plurality of gateway terminals (111 to 161), so that the selected radio channel allocation pattern in the plurality of radio channel allocation patterns is changed to a different radio channel allocation pattern one after another;
the radio channel allocation unit being **characterised by** a position information acquisition unit (621) for acquiring position information,
wherein when the position information acquired by the position information acquisition unit (621) satisfies a predetermined condition, the second process is executed.

6. The radio channel allocation device according to claim 5, wherein the radio channel allocation device (111) is a device which can communicate with any of the plurality of gateway terminals (111 to 161) or another device which is connected so as to be capable of communicating with the inter-cell network (107) and is different from the plurality of gateway terminals (111 to 161).

7. The radio channel allocation device according to claim 5 or 6, configured so that when a position indicated by the position information acquired by the position information acquisition unit (621) is within a predetermined position range, execution of the second process is postponed until the position indicated by the position information becomes outside the predetermined position range.

8. The radio channel allocation device according to claim 5 or 6, further comprising a time information acquisition unit (622) for acquiring time information, the radio channel allocation device configured so that when a time indicated by the time information acquired by the time information acquisition unit (622) is within a predetermined time range, execution of the second process is postponed until the time indicated by the time information is outside the predetermined time range.

9. The radio channel allocation device according to claim 5 or 6, further comprising an image detector for performing image analysis on video data transmitted from the radio terminal in the plurality of intra-cell radio networks (110 to 160) and detecting a predetermined image object as a result of the image analysis, the radio channel allocation device configured so that when the image detector detects the predetermined image object, execution of the second process is postponed.

10. A communication system comprising:
a plurality of intra-cell radio networks (110 to 160) including a radio terminal;
an inter-cell network (107);
a plurality of gateway terminals (111 to 161) for relaying communication between the plurality of intra-cell radio networks (110 to 160) and the inter-cell network (107) and for setting each radio channel to be used in the plurality of intra-cell radio networks (110 to 160) ; and
a radio channel allocation device (111) according to claims 5-9.

## Patentansprüche

1. Funkkanal-Zuweisungsverfahren zum Zuweisen von Funkkanälen zu jedem einer Vielzahl von Intrazell-Funknetzwerken (110 bis 160) in einem Kommunikationssystem, das die Vielzahl von Intrazell-Funknetzwerken (110 bis 160) enthält, enthaltend ein Funkendgerät, ein Interzell-Netzwerk (107) und eine Vielzahl von Gateway-Endgeräten (111 bis 161) zum Weiterleiten einer Kommunikation zwischen der Vielzahl von Intrazell-Funknetzwerken (110 bis 160) und dem Interzell-Netzwerk (107), wobei die Vielzahl von Gateway-Endgeräten (111 bis 161) jeden Funkkanal einstellen, die in der Vielzahl von Intrazell-Funknetzwerken (110 bis 160) zu verwenden sind, wobei das Funkkanal-Zuweisungsverfahren die Schritte umfasst zum:
Ausführen, durch eine Funkkanal-Zuweisungsvorrichtung (111), eines ersten Prozesses zum Bestimmen einer Vielzahl von Funkkanal-Zuweisungsmustern zum Zuweisen von Funkkanälen zu der Vielzahl von Intrazell-Funknetzwerken (110 bis 160), sodass wechselseitig unterschiedliche Funkkanäle zwischen benachbart lokalisierten Intrazell-Funknetzwerken der Vielzahl von Intrazell-Funknetzwerken (110 bis 160) eingestellt werden;
Wiederholen, durch die Funkkanal-Zuweisungsvorrichtung (111), eines zweiten Prozesses zum Auswählen eines Funkkanal-Zuweisungsmusters aus der Vielzahl von Funkkanal-Zuweisungsmustern und Liefern eines Funkkanal-Zuweisungswechsel-Befehlssignals basierend auf dem ausgewählten Funkkanal-Zuweisungsmuster an die Vielzahl von Gateway-Endgeräten (111 bis 161), sodass das ausgewählte Funkkanal-Zuweisungsmuster in der Vielzahl von Funkkanal-Zuweisungsmustern in ein unterschiedliches Funkkanal-Zuweisungsmuster nacheinander geändert wird;
wobei das Funkkanal-Zuweisungsverfahren **gekennzeichnet ist durch**
Erfassen einer Positionsinformation **durch** eine Positionsinformation-Erfassungseinheit (621) der Funkkanal-Zuweisungsvorrichtung (111),
wobei, wenn die Positionsinformation eine vorbestimmte Bedingung erfüllt, der zweite Prozess ausgeführt wird.

2. Funkkanal-Zuweisungsverfahren nach Anspruch 1, wobei, wenn eine von der Positionsinformation angezeigte Position innerhalb eines vorbestimmten Positionsbereichs ist, eine Ausführung des zweiten Prozesses verschoben wird, bis die von der Positionsinformation angezeigte Position außerhalb des vorbestimmten Positionsbereichs ist.

3. Funkkanal-Zuweisungsverfahren nach Anspruch 1, weiterhin umfassend einen Schritt zum Erfassen einer Zeitinformation,
wobei, wenn eine von der Zeitinformation angezeigte Zeit innerhalb eines vorbestimmten Zeitbereichs ist, eine Ausführung des zweiten Prozesses verschoben wird, bis die von der Zeitinformation angezeigte Zeit außerhalb des vorbestimmten Zeitbereichs ist.

4. Funkkanal-Zuweisungsverfahren nach Anspruch 1, wobei, wenn eine Bildanalyse von Videodaten, die von dem Funkendgerät in der Vielzahl von Intrazell-Funknetzwerken gesendet wird, durchgeführt wird und ein vorbestimmtes Bildobjekt als Ergebnis der Bildanalyse erfasst wird, eine Ausführung des zweiten Prozesses verschoben wird.

5. Funkkanal-Zuweisungsvorrichtung (111) zum Zuweisen von Funkkanälen zu jedem einer Vielzahl von Intrazell-Funknetzwerken (110 bis 160) in einem Kommunikationssystem, das die Vielzahl von Intrazell-Funknetzwerken (110 bis 160) enthält, enthaltend ein Funkendgerät, ein Interzell-Netzwerk (107) und eine Vielzahl von Gateway-Endgeräten (111 bis 161) zum Weiterleiten einer Kommunikation zwischen der Vielzahl von Intrazell-Funknetzwerken (110 bis 160) und dem Interzell-Netzwerk (107), und zum Einstellen jedes Funkkanals, die in der Vielzahl von Intrazell-Funknetzwerken zu verwenden sind, wobei die Funkkanal-Zuweisungsvorrichtung (111) umfasst:
eine Funkkanal-Zuweisungsmuster-Entscheidungseinheit (306) zum Ausführen eines ersten Prozesses zum Bestimmen einer Vielzahl von Funkkanal-Zuweisungsmustern zum Zuweisen von Funkkanälen zu der Vielzahl von Intrazell-Funknetzwerken, sodass wechselseitig unterschiedliche Funkkanäle zwischen benachbart lokalisierten Intrazell-Funknetzwerken (110 bis 160) der Vielzahl von Intrazell-Funknetzwerken (110 bis 160) eingestellt werden;
eine Funkkanal-Zuweisungswechsel-Meldesteuereinheit (307) zum Wiederholen eines zweiten Prozesses zum Auswählen eines Funkkanal-Zuweisungsmusters aus der Vielzahl von Funkkanal-Zuweisungsmustern und Liefern eines Funkkanal-Zuweisungswechsel-Befehlssignals basierend auf dem ausgewählten Funkkanal-Zuweisungsmuster an die Vielzahl von Gateway-Endgeräten (111 bis 161), sodass das ausgewählte Funkkanal-Zuweisungsmuster in der Vielzahl von Funkkanal-Zuweisungsmustern in ein unterschiedliches Funkkanal-Zuweisungsmuster nacheinander geändert wird;
wobei die Funkkanal-Zuweisungseinheit **gekennzeichnet ist durch**
eine Positionsinformation-Erfassungseinheit (621) zum Erfassen einer Positionsinformation,
wobei, wenn die von der Positionsinformation-Erfassungseinheit (621) erfasste Positionsinformation eine vorbestimmte Bedingung erfüllt, der zweite Prozess ausgeführt wird.

6. Funkkanal-Zuweisungsvorrichtung nach Anspruch 5, wobei die Funkkanal-Zuweisungsvorrichtung (111) eine Vorrichtung ist, die mit irgendeinem der Vielzahl von Gateway-Endgeräten (111 bis 161) oder einer anderen Vorrichtung, die verbunden ist, um in der Lage zu sein, mit dem Interzell-Netzwerk (107) zu kommunizieren, kommunizieren kann, und verschieden von der Vielzahl von Gateway-Endgeräten (111 bis 161) ist.

7. Funkkanal-Zuweisungsvorrichtung nach Anspruch 5 oder 6, die so konfiguriert ist, dass, wenn eine Position, die von der durch die Positionsinformation-Erfassungseinheit (621) erfasste Positionsinformation angezeigt wird, innerhalb eines vorbestimmten Positionsbereichs ist, eine Ausführung des zweiten Prozesses verschoben wird, bis die von der Positionsinformation angezeigte Position außerhalb des vorbestimmten Positionsbereichs ist.

8. Funkkanal-Zuweisungsvorrichtung nach Anspruch 5 oder 6, weiterhin umfassend eine Zeitinformation-Erfassungseinheit (622) zum Erfassen einer Zeitinformation,
wobei die Funkkanal-Zuweisungsvorrichtung so eingerichtet ist, dass, wenn eine Zeit, die von der durch die Zeitinformation-Erfassungseinheit (622) erfassten Zeitinformation angezeigt wird, innerhalb eines vorbestimmten Zeitbereichs ist, eine Ausführung des zweiten Prozesses verschoben wird, bis die von der Zeitinformation angezeigte Zeit außerhalb des vorbestimmten Zeitbereichs ist.

9. Funkkanal-Zuweisungsvorrichtung nach Anspruch 5 oder 6, weiterhin umfassend eine Bilderfassungseinheit zum Durchführen einer Bildanalyse von Videodaten, die von dem Funkendgerät in der Vielzahl von Intrazell-Funknetzwerken (110 bis 160) gesendet werden, und zum Erfassen eines vorbestimmten Bildobjekts als Ergebnis der Bildanalyse,
wobei die Funkkanal-Zuweisungsvorrichtung so eingerichtet ist, dass, wenn die Bilderfassungseinheit das vorbestimmte Bildobjekt erfasst, eine Ausführung des zweiten Prozesses verschoben wird.

10. Kommunikationssystem, umfassend:
eine Vielzahl von Intrazell-Funknetzwerken (110 bis 160), enthaltend ein Funkendgerät;
ein Interzell-Netzwerk (107);
eine Vielzahl von Gateway-Endgeräten (111 bis 161) zum Weiterleiten einer Kommunikation zwischen der Vielzahl von Intrazell-Funknetzwerken (110 bis 160) und dem Interzell-Netzwerk (107) und zum Einstellen jedes Funkkanals, die in der Vielzahl von Intrazell-Funknetzwerken zu verwenden sind; und
eine Funkkanal-Zuweisungsvorrichtung (111) nach einem der Ansprüche 5 bis 9.

## Revendications

1. Procédé d'allocation de canaux radio consistant à allouer des canaux radio à chacun d'une pluralité de réseaux radio intracellulaires (110 à 160) dans un système de communication qui comprend la pluralité de réseaux radio intracellulaires (110 à 160) comportant un terminal radio, un réseau intercellulaire (107), et une pluralité de terminaux passerelles (111 à 161) pour relayer une communication entre la pluralité de réseaux radio intracellulaires (110 à 160) et le réseau intercellulaire (107), la pluralité de terminaux passerelles (111 à 161) réglant chaque canal radio à utiliser dans la pluralité de réseaux radio intracellulaires (110 à 160), le procédé d'allocation de canaux radio comprenant les étapes suivantes :
l'exécution, par un dispositif d'allocation de canaux radio (111), d'un premier processus de détermination d'une pluralité de motifs d'allocation de canaux radio pour allouer des canaux radio à la pluralité de réseaux radio intracellulaires (110 à 160) de sorte que des canaux radio mutuellement différents soient réglés entre des réseaux radio intracellulaires adjacents de la pluralité de réseaux radio intracellulaires (110 à 160) ;
la répétition, par le dispositif d'allocation de canaux radio (111), d'un second processus de sélection d'un motif d'allocation de canaux radio parmi la pluralité de motifs d'allocation de canaux radio et la fourniture d'un signal d'instruction de commutation d'allocation de canaux radio sur la base du motif d'allocation de canaux radio choisi à la pluralité de terminaux passerelles (111 à 161) de sorte que le motif d'allocation de canaux radio choisi dans la pluralité de motifs d'allocation de canaux radio passe à un motif d'allocation de canaux radio différent l'un après l'autre ; le procédé d'allocation de canaux radio étant **caractérisé par**
l'acquisition d'informations de position par une unité d'acquisition d'informations de position (621) du dispositif d'allocation de canaux radio (111),
dans lequel, lorsque les informations de position répondent à un état prédéterminé, le second processus est exécuté.

2. Procédé d'allocation de canaux radio selon la revendication 1, dans lequel lorsqu'une position indiquée par les informations de position se trouve dans une plage de positions prédéterminée, l'exécution du second processus est ajournée jusqu'à ce que la position indiquée par les informations de position se trouve en dehors de la plage de positions prédéterminée.

3. Procédé d'allocation de canaux radio selon la revendication 1, comprenant en outre une étape d'acquisition d'informations de temps, dans lequel lorsqu'un temps indiqué par les informations de temps se situe dans une plage de temps prédéterminée, l'exécution du second processus est ajournée jusqu'à ce que le temps indiqué par les informations de temps se trouve en dehors de la plage de temps prédéterminée.

4. Procédé d'allocation de canaux radio selon la revendication 1, dans lequel lorsqu'une analyse d'image sur des données vidéo transmises par le terminal radio dans la pluralité de réseaux radio intracellulaires est réalisée et qu'un objet image prédéterminé est détecté à la suite de l'analyse d'image, l'exécution du second processus est ajournée.

5. Dispositif d'allocation de canaux radio (111) pour allouer des canaux radio à chacun d'une pluralité de réseaux radio intracellulaires (110 à 160) dans un système de communication qui comprend la pluralité de réseaux radio intracellulaires (110 à 160) comportant un terminal radio, un réseau intercellulaire (107), et une pluralité de terminaux passerelles (111 à 161) pour relayer une communication entre la pluralité de réseaux radio intracellulaires (110 à 160) et le réseau intercellulaire (107) et pour
(111 à 161) régler chaque canal radio de la pluralité de réseaux radio intracellulaires, le dispositif d'allocation de canaux radio (111) comprenant : une unité de décision de motif d'allocation de canaux radio (306) pour exécuter un premier processus de détermination d'une pluralité de motifs d'allocation de canaux radio pour allouer des canaux radio à la pluralité de réseaux radio intracellulaires de sorte que des canaux radio mutuellement différents soient réglés entre des réseaux radio intracellulaires adjacents (110 à 160) de la pluralité de réseaux radio intracellulaires (110 à 160) ;
une unité de commande de notification de commutation d'allocation de canaux radio (307) pour répéter un second processus de sélection d'un motif d'allocation de canaux radio parmi la pluralité de motifs d'allocation de canaux radio et fournir un signal d'instruction de commutation d'allocation de canaux radio sur la base du motif d'allocation de canaux radio choisi à la pluralité de terminaux passerelles (111 à 161), de sorte que le motif d'allocation de canaux radio choisi dans la pluralité de motifs d'allocation de canaux radio passe à un motif d'allocation de canal radio différent l'un après l'autre ; l'unité d'allocation de canaux radio étant **caractérisée par**
une unité d'acquisition d'informations de position (621) pour acquérir des informations de position,
dans lequel lorsque les informations de position acquises par l'unité d'acquisition d'informations de position (621) répondent à un état prédéterminé, le second processus est exécuté.

6. Dispositif d'allocation de canaux radio selon la revendication 5, dans lequel le dispositif d'allocation de canaux radio (111) est un dispositif qui peut communiquer avec l'un quelconque de la pluralité de terminaux passerelles (111 à 161) ou un autre dispositif qui est connecté de manière à être capable de communiquer avec le réseau intercellulaire (107) et est différent de la pluralité de terminaux passerelles (111 à 161).

7. Dispositif d'allocation de canaux radio selon la revendication 5 ou 6, configuré de sorte que lorsqu'une position indiquée par les informations de position acquises par l'unité d'acquisition d'informations de position (621) se trouve dans une plage de positions prédéterminée, l'exécution du second processus soit ajournée jusqu'à ce que la position indiquée par les informations de position se trouve à l'extérieur de la plage de positions prédéterminée.

8. Dispositif d'allocation de canaux radio selon la revendication 5 ou 6, comprenant en outre une unité d'acquisition d'informations de temps (622) pour acquérir des informations de temps,
le dispositif d'allocation de canaux radio étant configuré de sorte que lorsqu'un temps indiqué par les informations de temps acquises par l'unité d'acquisition d'informations de temps (622) se trouve dans une plage de temps prédéterminée, l'exécution du second processus soit ajournée jusqu'à ce que le temps indiqué par les informations de temps se trouve à l'extérieur de la plage de temps prédéterminée.

9. Dispositif d'allocation de canaux radio selon la revendication 5 ou 6, comprenant en outre un détecteur d'image pour réaliser une analyse d'image sur des données vidéo transmises par le terminal radio dans la pluralité de réseaux radio intracellulaires (110 à 160) et détecter un objet image prédéterminé à la suite de l'analyse d'image,
le dispositif d'allocation de canaux radio étant configuré de sorte que, lorsque le détecteur d'image détecte l'objet image prédéterminé, l'exécution du second processus soit ajournée.

10. Système de communication comprenant :
une pluralité de réseaux radio intracellulaires (110 à 160) comprenant un terminal radio ;
un réseau intercellulaire (107) ;
une pluralité de terminaux passerelles (111 à 161) pour relayer une communication entre la pluralité de réseaux radio intracellulaires (110 à 160) et le réseau intercellulaire (107) et pour régler chaque canal radio à utiliser dans la pluralité de réseaux radio intracellulaires (110 à 160) ; et
un dispositif d'allocation de canaux radio (111) selon les revendications 5 à 9.
